# EUROPEAN PATENT APPLICATION

(11) **EP 4 780 115 A1**
(43) Date of publication of application: **22.07.2026**
(21) Application number: 23952230.3
(22) Date of filing: 13.09.2023
(51) Int. Cl.: H04W 72/54

(54) **ACCESS POINT AND WIRELESS TERMINAL DEVICE**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Meissner Bolte Partnerschaft mbB
(86) International application number: PCT/JP2023/033418
(87) International publication number: WO 2025/057337

(57) **Abstract**

An access point of an embodiment includes a communication circuit and a processor. The communication circuit is configured to transmit and receive wireless signals using a plurality of subcarriers. The processor is configured to establish links with a plurality of wireless terminal apparatuses using the communication circuit, set a plurality of units RU in which the plurality of subcarriers are grouped, allocate a usage for each of the units RU, based on quality requirements received from the plurality of wireless terminal apparatuses, and notify the plurality of wireless terminal apparatuses of information on the allocated usage using a trigger frame indicating a transfer period of an uplink frame.

## Description

### [Technical Field]

Embodiments relate to an access point and a wireless terminal apparatus.

### [Background Art]

A wireless local area network (LAN) is known as a communication system that wirelessly connects an access point and a wireless terminal apparatus. A wireless terminal apparatus can access a network via an access point within a communication area using a wireless LAN. In addition, a restricted target wake time (R-TWT) function is known as a method for transmitting and receiving low-latency traffic that requires low latency between an access point and a wireless terminal apparatus. An access point that uses the R-TWT function sets a service period at a period according to the required latency of the low-latency traffic and notifies the wireless terminal apparatus of the set service period using a beacon signal. The access point then prioritizes transmission and reception of low-latency traffic during the periodically set service period. This can reduce the latency and jitter of the low-latency traffic.

### [Citation List]

### [Non Patent Literature]

[NPL 1] IEEE802.11be D4.0, "35.3 Multi-link operation, 35.8 Restricted TWT (R-TWT)," p489-p580, p611-p616, July 2023

### [Summary of Invention]

### [Technical Problem]

However, low-latency traffic may include not only low-latency traffic that occurs periodically, but also low-latency traffic that occurs non-periodically. In a communication system, it is desirable to be able to satisfy the required latency for low-latency traffic that occurs non-periodically. Further, in a communication system, it is desirable that quality requirements can be satisfied for traffic having quality requirements other than non-periodic low latency traffic.

The present invention has been made in consideration of the above circumstances, and an object thereof is to provide an access point and a terminal which are capable of satisfying quality requirements for traffic.

### [Solution to Problem]

An access point of an embodiment includes a communication circuit and a processor. The communication circuit is configured to transmit and receive wireless signals using a plurality of subcarriers. The processor is configured to establish links with a plurality of wireless terminal apparatuses using the communication circuit, set a plurality of units in which the plurality of subcarriers are grouped, allocate usage for each of the units, based on quality requirements received from the plurality of wireless terminal apparatuses, and notify the plurality of wireless terminal apparatuses of information on the allocated usage using a trigger frame indicating a transfer period of an uplink frame.

### [Advantageous Effects of Invention]

According to the embodiment, it is possible to provide an access point and a wireless terminal apparatus which are capable of satisfying quality requirements for traffic.

### [Brief Description of Drawings]

[Fig. 1] Fig. 1 is a block diagram showing an example of a configuration of a communication system according to an embodiment.
[Fig. 2] Fig. 2 is a schematic diagram showing an example of a RU allocated to a 20 MHz band.
[Fig. 3] Fig. 3 is a schematic diagram showing an example of a format of a wireless frame used in a communication system according to an embodiment.
[Fig. 4] Fig. 4 is a schematic diagram showing an example of a format of a trigger frame used in a communication system according to an embodiment.
[Fig. 5] Fig. 5 is a block diagram showing an example of a hardware configuration of an access point according to an embodiment.
[Fig. 6] Fig. 6 is a block diagram showing an example of a hardware configuration of a wireless terminal apparatus according to an embodiment.
[Fig. 7] Fig. 7 is a block diagram showing an example of a functional configuration of an access point according to an embodiment.
[Fig. 8] Fig. 8 is a block diagram showing an example of a configuration of a channel access function of an access point according to an embodiment.
[Fig. 9] Fig. 9 is a block diagram showing an example of a functional configuration of a wireless terminal apparatus according to an embodiment.
[Fig. 10] Fig. 10 is a block diagram showing an example of a configuration of a channel access function of a wireless terminal apparatus according to an embodiment.
[Fig. 11] Fig. 11 is a time chart showing an example of a downlink data transfer method using OFDMA in a communication system according to an embodiment.
[Fig. 12] Fig. 12 is a time chart showing an example of an uplink data transfer method using OFDMA in a communication system according to an embodiment.
[Fig. 13] Fig. 13 is a schematic diagram showing an example of a configuration of an OFDMA frame transfer period in a communication system according to an embodiment.
[Fig. 14] Fig. 14 is a flowchart showing an example of a usage-specific RU allocation negotiation method by a quality management unit of an access point according to an embodiment.
[Fig. 15] Fig. 15 is a flowchart showing an example of a communication quality management method of a quality management unit of an access point according to an embodiment.
[Fig. 16] Fig. 16 is a flowchart showing an example of a RU allocation method by a resource control unit of an access point according to an embodiment.
[Fig. 17] Fig. 17 is a flowchart showing an example of a trigger frame generation method by a frame processing unit of an access point according to an embodiment.
[Fig. 18] Fig. 18 is a flowchart showing an example of an OFDMA frame generation method by a frame processing unit of an access point according to an embodiment.
[Fig. 19] Fig. 19 is a flowchart showing an example of a downlink OFDMA frame transmission method by a transmitter/receiver unit of an access point according to an embodiment.
[Fig. 20] Fig. 20 is a flowchart showing an example of a downlink non-periodic low latency traffic transmission method by a transmitter/receiver unit of an access point according to an embodiment.
[Fig. 21] Fig. 21 is a flowchart showing an example of a usage-specific RU allocation negotiation method by a quality management unit of a wireless terminal apparatus according to an embodiment.
[Fig. 22] Fig. 22 is a flowchart showing an example of a communication quality management method by a quality management unit of a wireless terminal apparatus according to an embodiment.
[Fig. 23] Fig. 23 is a flowchart showing an example of an RU allocation information acquisition and updating method by a resource control unit of a wireless terminal apparatus according to an embodiment.
[Fig. 24] Fig. 24 is a flowchart showing an example of a downlink frame processing method by a frame processing unit of a wireless terminal apparatus according to an embodiment.
[Fig. 25] Fig. 25 is a flowchart showing an example of an uplink frame processing method by a frame processing unit of a wireless terminal apparatus according to an embodiment.
[Fig. 26] Fig. 26 is a flowchart showing an example of a downlink frame reception method by a transmitter/receiver unit of a wireless terminal apparatus according to an embodiment.
[Fig. 27] Fig. 27 is a flowchart showing an example of an uplink OFDMA frame transmission method by a transmitter/receiver unit of a wireless terminal apparatus according to an embodiment.
[Fig. 28] Fig. 28 is a flowchart showing an example of an uplink non-periodic low latency traffic transmission method by a transmitter/receiver unit of a wireless terminal apparatus according to an embodiment.

### [Description of Embodiments]

Embodiments are described below with reference to the drawings. In the embodiment, a device or a method for embodying the technical idea of the invention will be exemplified. The drawings are schematic or conceptual. In the following description, components having the same function and configuration are given a common reference symbol. In addition, when a plurality of components having the same function and configuration are to be distinguished from each other, a hyphen and a number are added to the end of the reference symbol.

### <1> Configuration

First, the configuration of a communication system 1 according to the embodiment will be described.

### <1-1> Configuration of communication system 1

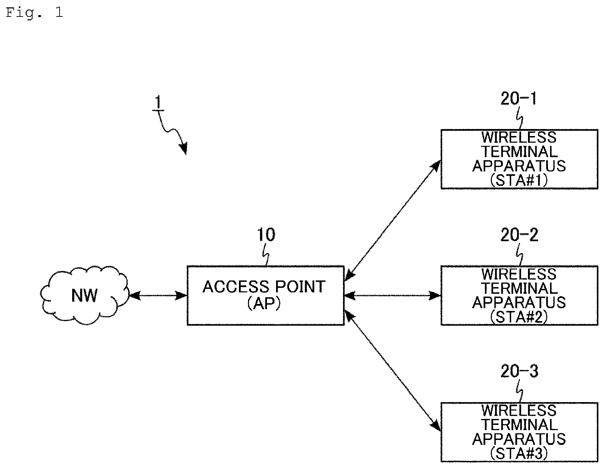

Fig. 1 is a block diagram showing an example of the configuration of the communication system 1 according to the embodiment. As shown in Fig. 1, the communication system 1 includes an access point (hereinafter also referred to as "AP") 10 and at least one wireless terminal apparatus 20. In the example shown in Fig. 1, three wireless terminal apparatuses 20-1, 20-2, and 20-3 are wirelessly connected to the access point 10.

The access point 10 is a base station of a wireless LAN. The access point 10 is configured to establish links with a plurality of wireless terminal apparatuses 20 and be able to wirelessly communicate with each of the wireless terminal apparatuses 20 with which the link has been established. The access point 10 is also connected to a network NW and is configured to be able to communicate with a server (not shown) on the network NW. The access point 10 and the network NW may be connected wirelessly or by wire.

The wireless terminal apparatus 20 is a wireless terminal such as a smartphone or a personal computer (PC). The wireless terminal apparatus 20 is configured to be able to communicate with a server on the network NW via the wirelessly connected access point 10. In the following, the wireless terminal apparatuses 20-1, 20-2, and 20-3 that have established a link with the access point 10 are also referred to as "STA#1," "STA#2," and "STA#3," respectively.

Wireless communication between the access point 10 and the wireless terminal apparatus 20 complies with, for example, the IEEE 802.11 standard. The IEEE 802.11 standard has a wireless communication function based on the open systems interconnection (OSI) reference model. In the OSI reference model, communication functions are divided into seven layers (Layer 1: physical layer, Layer 2: data link layer, Layer 3: network layer, Layer 4: transport layer, Layer 5: session layer, Layer 6: presentation layer, and Layer 7: application layer). The data link layer includes a logical link control (LLC) sublayer and a media access control (MAC) sublayer. The LLC sublayer forms an LLC packet by adding a destination service access point (DSAP) header and a source service access point (SSAP) header to data input from an upper application. The MAC layer adds MAC header to an LLC packet, for example, to form an MAC frame. This specification mainly describes the processing of the MAC sublayers of the first and second layers, and omits the processing of other layers.

Each of the access point 10 and the wireless terminal apparatus 20 supports orthogonal frequency division multiple access (OFDMA) as a wireless communication method. OFDMA is a method that combines Orthogonal Frequency Division Multiplexing (OFDM) and Time Division Multiple Access (TDMA). OFDM is a method that divides a channel bandwidth allocated to wireless communication into a plurality of subcarriers (tones). OFDM achieves narrowband subcarriers by ensuring that the phases of subcarriers allocated to adjacent frequencies are orthogonal to each other and allowing parts of the frequency band to overlap. TDMA is a multiplexing method that divides the carrier used for communication into fixed periods and allocates STAs to each period. OFDMA, which is a combination of OFDM and TDMA, divides the right to use each subcarrier into time periods and allocates it to different STAs. OFDMA can finely change the allocation of subcarriers according to the radio wave conditions of each STA, improving the efficiency of radio wave usage. In OFDMA, subcarriers are allocated to a plurality of STAs in units of resource unit (RU), which is a group of subcarriers configuring one channel. Then, in OFDMA, data may be transmitted in parallel in units of RU.

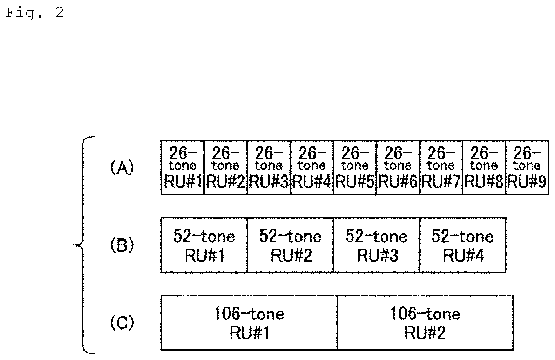

Fig. 2 is a schematic diagram showing an example of RUs allocated to a 20 MHz band. (A) in Fig. 2 shows an example in which nine 26-tone RUs #1 to #9, each made up of 26 subcarriers, are allocated to the 20 MHz band. In this case, one of the nine 26-tone RUs #1 to #9 is allocated to each STA. (B) in Fig. 2 shows an example in which four 52-tone RUs #1 to #4, each made up of 52 subcarriers, are allocated to a 20 MHz band. In this case, one of the four 52-tone RUs #1 to #4 is allocated to each STA. (C) in Fig. 2 shows an example in which two 106-tone RUs #1 and #2, each made up of 106 subcarriers, are allocated to a 20 MHz band. In this case, one of the two 52-tone RUs #1 and #2 is allocated to each STA. Note that an RU may be made up of other numbers of subcarriers. For example, an RU may be made up of more than 106 subcarriers. In addition, a plurality of types of RUs, each made up of a different number of subcarriers, may be allocated to a channel band allocated to wireless communication. The maximum number of RUs varies depending on the channel bandwidth allocated to wireless communication.

### (Wireless Frame Format)

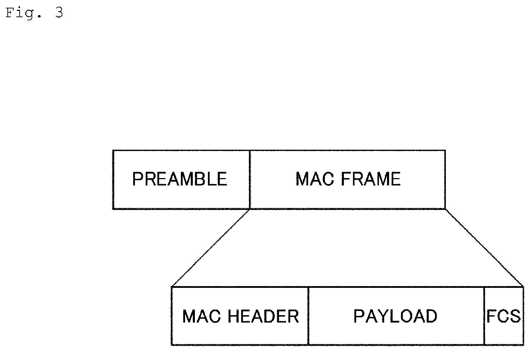

Fig. 3 is a schematic diagram showing an example of a format of a wireless frame used in the communication system 1 according to the embodiment. As shown in Fig. 3, the wireless frame includes a preamble and a MAC frame. The preamble is placed at the beginning of the wireless frame and includes a bit string indicating the start position of the wireless frame. The MAC frame includes, for example, a MAC header, a payload, and an FCS (Frame Check Sequence) field. The MAC header stores information such as a frame type and a data length. The payload stores information according to the frame type, and includes an LLC packet when data (traffic) is transmitted. The FCS field stores an error detection code used to detect errors in the MAC header and the payload. In the communication system 1, the access point 10 can control the transmission of uplink data (traffic) by the STA using the trigger frame. The format of the trigger frame will be described below.

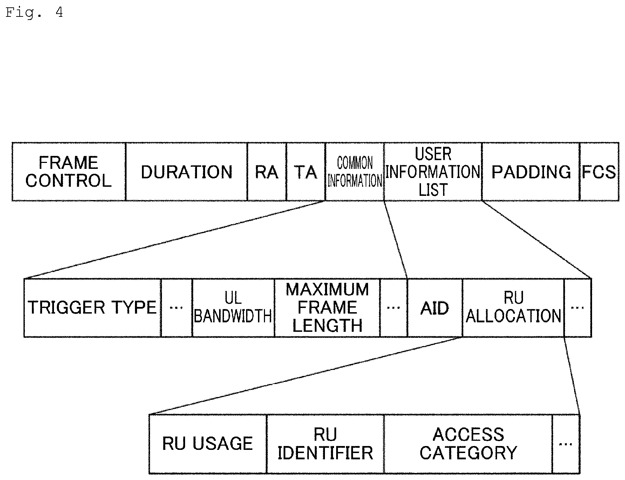

Fig. 4 is a schematic diagram showing an example of a format of a trigger frame used in the communication system 1 according to the embodiment. As shown in Fig. 4, the plurality of fields included in the trigger frame include, for example, a frame control field, a duration field, a first address field (RA: Receiver Address), a second address field (TA: Transmitter Address), a common information field, a user information list field, a padding field, and a frame check sequence (FCS) field. In this example, a set including the frame control field, the duration field, and the address field corresponds to the MAC header, and a set including the common information field, the user information list field, and the padding field corresponds to the payload.

The frame control field stores various control information. For example, the frame control field includes information indicating the frame type of the wireless frame. The duration field indicates the scheduled period of time during which the wireless line will be used. The first address field and the second address field indicate the BSSID (Basic Service Set Identifier), the source address, the destination address, the address of the transmitter terminal, the address of the receiver terminal, and the like. The common information field indicates information shared among a plurality of STAs. The user information list field indicates information allocated to each STA. The padding is an area for adjusting a data length of a wireless frame.

The common information field includes, for example, a trigger type subfield, a UL (Uplink) bandwidth subfield, and a maximum frame length subfield. The trigger type subfield indicates the type of trigger frame. The UL bandwidth subfield indicates a channel bandwidth available for transmission of a frame. The maximum frame length subfield indicates the maximum length of a frame that can satisfy the required latency of non-periodic low latency traffic, which will be described later.

The user information list field includes, for example, an AID (terminal identifier) subfield and an RU allocation subfield. The allocation of RUs to each STA can be specified by the information of the STA designated by the AID subfield and the location of the RU indicated by the RU allocation subfield. In other words, the STA can recognize that an RU for its own station is allocated by the AID subfield. The STA can recognize the setting of the RU allocated to its own station by the RU allocation subfield.

The RU allocation subfield includes, for each RU, information on, for example, each of an RU use, an RU identifier, and an access category. The RU use includes information such as whether it is dedicated to one indicated in the access category, whether it is shared with one with a higher priority than the one indicated in the access category, whether transmission may start in the middle of an OFDMA frame, and whether it is dedicated to a specific wireless terminal apparatus 20 (indicated by the AID). The OFDMA frame is allocated to a subcarrier on the basis of the RU allocation, and corresponds to a MAC frame that is a target for transmission/reception using OFDMA. The RU identifier indicates an RU that is a target for allocation. The access category is, for example, non-periodic low latency, deterministic periodic low latency, a video, a sound, a best effort, and the like. Note that in the following, the access category may be abbreviated as

### "AC."

### <1-2> Hardware configuration of communication system 1

The following describes the hardware configuration of the communication system 1 according to the embodiment.

### <1-2-1> Hardware configuration of access point 10

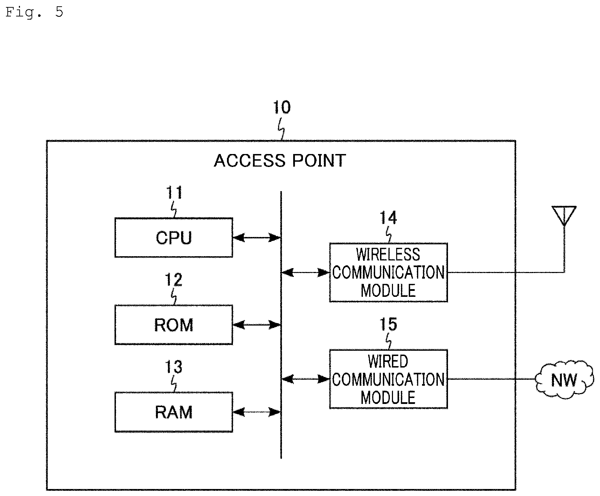

Fig. 5 is a block diagram showing an example of the hardware configuration of the access point 10 according to the embodiment. As shown in Fig. 5, the access point 10 includes, for example, a central processing unit (CPU) 11, a read only memory (ROM) 12, a random access memory (RAM) 13, a wireless communication module 14, and a wired communication module 15.

The CPU 11 is an integrated circuit capable of executing various programs, and controls the overall operation of the access point 10. The ROM 12 is, for example, a non-volatile semiconductor memory, and stores programs and control data for controlling the access point 10. The RAM 13 is, for example, a volatile semiconductor memory, and is used as a working area for the CPU 11. The wireless communication module 14 is configured to be able to transmit and receive wireless signals via an antenna, and is a circuit used for transmitting and receiving data and the like between the wireless terminal apparatus 20. The wired communication module 15 is a circuit used for transmitting and receiving data and the like by wired signals, and is configured to be connectable to the network NW.

Note that the access point 10 may have other hardware configurations. For example, the access point 10 may be wirelessly connected to the network NW. In this case, the wired communication module 15 may be omitted from the access point 10. The antenna may be built into the access point 10, or may be connected externally. The CPU 11 may be referred to as a "processor." The wireless communication module 14 may be referred to as a "communication circuit."

### <1-2-2> Hardware configuration of wireless terminal apparatus 20

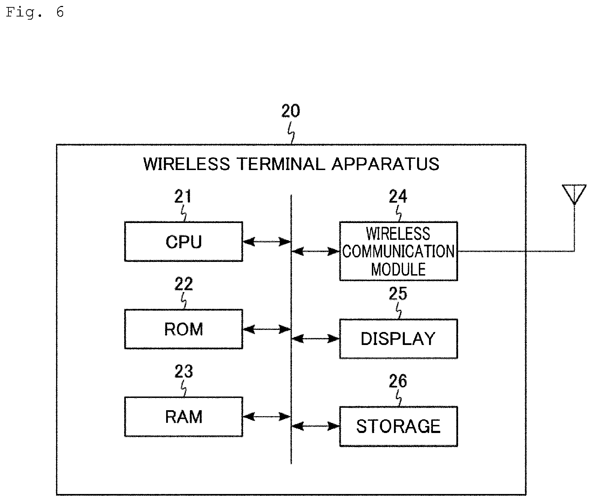

Fig. 6 is a block diagram showing an example of the hardware configuration of the wireless terminal apparatus 20 according to the embodiment. As shown in Fig. 6, the wireless terminal apparatus 20 includes, for example, a CPU 21, a ROM 22, a RAM 23, a wireless communication module 24, a display 25, and a storage 26.

The CPU 21 is an integrated circuit capable of executing various programs, and controls the overall operation of the wireless terminal apparatus 20. The ROM 22 is, for example, a non-volatile semiconductor memory, and stores programs and control data for controlling the wireless terminal apparatus 20. The RAM 23 is, for example, a volatile semiconductor memory, and is used as a working area for the CPU 21. The wireless communication module 24 is configured to be able to transmit and receive wireless signals via an antenna, and is a circuit used for transmitting and receiving data to and from the access point 10. The display 25 displays, for example, a graphical user interface (GUI) and the like corresponding to application software. The storage 26 is a non-volatile storage device, and stores, for example, system software of the wireless terminal apparatus 20.

Note that the wireless terminal apparatus 20 may have other hardware configurations. For example, when the wireless terminal apparatus 20 is an IoT (Internet of Things) terminal or the like, the display 25 may be omitted from the wireless terminal apparatus 20. The display 25 may have a function as an input interface for the wireless terminal apparatus 20. The antenna may be built into the wireless terminal apparatus 20 or may be externally connected. The CPU 21 may be referred to as a "processor." The wireless communication module 24 may be referred to as a "communication circuit."

### <1-3> Functional configuration of communication system 1 The following describes the functional configuration of the communication system 1 according to the embodiment.

### <1-3-1> Functional configuration of access point 10

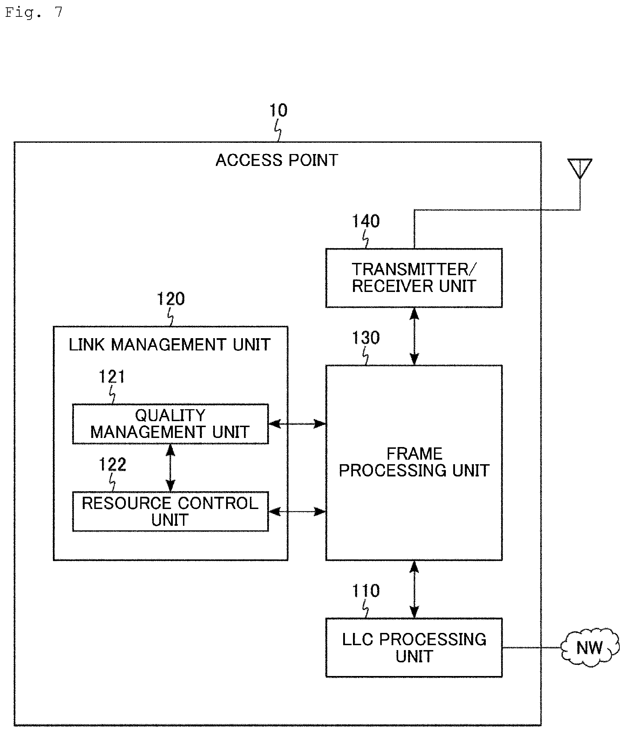

Fig. 7 is a block diagram showing an example of the functional configuration of the access point 10 according to the embodiment. As shown in Fig. 7, the access point 10 functions as a computer including, for example, an LLC processing unit 110, a link management unit 120, a frame processing unit 130, and a transmitter/receiver unit 140. The LLC processing unit 110 executes the processing of the LLC sublayer of the second layer and the third to seventh layers. The link management unit 120, the frame processing unit 130, and transmitter/receiver unit 140 execute the processing of the MAC sublayer of the second layer. The transmitter/receiver unit 140 also executes the processing of the first layer.

The LLC processing unit 110 generates an LLC packet by adding a DSAP header, an SSAP header, and the like to the data received from the network NW. The LLC processing unit 110 then inputs the generated LLC packet to the frame processing unit 130. The LLC processing unit 110 also extracts data from the LLC packet input from the frame processing unit 130. The LLC processing unit 110 then transmits the extracted data to the network NW.

The link management unit 120 manages the state of the link between the access point 10 and the wireless terminal apparatus 20, for example. The link management unit 120 can execute association processing and authentication processing in response to a connection request from the wireless terminal apparatus 20. MAC frames including information about the link, OFDMA, and the like are input and output between the link management unit 120 and the frame processing unit 130. The link management unit 120 includes a quality management unit 121 and a resource control unit 122.

The quality management unit 121 exchanges quality requirements with the wireless terminal apparatus 20, in which the quality requirements may include a required latency, a throughput, a packet arrival rate, and the like for low-latency traffic that occurs aperiodically (hereinafter referred to as "non-periodic low latency traffic"). Then, the quality management unit 121 requests necessary usage-specific RUs from the resource control unit 122 in accordance with the quality requirements received from the wireless terminal apparatus 20. The usage-specific RUs are RUs allocated in accordance with the usage of traffic. The usage-specific RUs may include dedicated RUs, high-priority RUs, and the like. The dedicated RUs are RUs that are allocated for non-periodic low latency traffic regardless of the presence or absence of traffic. The high-priority RUs are RUs allocated to predetermined high-priority traffic. The high-priority traffic is associated with, for example, a category having a priority equal to or greater than an access category VI. Information, such as Preferred_AC, may be added to the usage-specific RU. Preferred_AC indicates an access category to which transmission is prioritized in the associated RU.

The resource control unit 122 determines allocation of RUs to the uplink/downlink OFDMA frames. The resource control unit 122 then notifies the frame processing unit 130 of the determined allocation of RUs. In the following, information on RU allocation will also be referred to as "RU allocation information." The RU allocation information may include information on the allocation of usage-specific RUs when usage-specific RUs are requested by the quality management unit 121.

The frame processing unit 130 generates a MAC frame by adding a MAC header to the LLC packet input from the LLC processing unit 110 on the basis of the RU allocation notified by the resource control unit 122. The frame processing unit 130 then outputs the generated MAC frame to the transmitter/receiver unit 140. The frame processing unit 130 can also output a trigger frame generation instruction to the transmitter/receiver unit 140 on the basis of information received from the link management unit 120. The frame processing unit 130 also outputs the MAC frame input from the transmitter/receiver unit 140 to the LLC processing unit 110, the quality management unit 121, the resource control unit 122, and the like depending on the type of MAC frame. The frame processing unit 130 may extract an LLC packet from the MAC frame and output the extracted LLC packet to the LLC processing unit 110 and the like.

The transmitter/receiver unit 140 performs carrier sensing on the basis of CSMA/CA for each link and transmits the MAC frame using the link that has acquired the right to transmit. When transmitting a MAC frame, the transmitter/receiver unit 140 generates a wireless frame by adding a preamble and the like to the MAC frame input from the frame processing unit 130. The transmitter/receiver unit 140 then converts the generated wireless frame into a wireless signal (wireless medium) and radiates (transmits) it via an antenna. The transmitter/receiver unit 140 can allocate the OFDMA frame to a subcarrier on the basis of the RU allocation and transmit the frame. The transmitter/receiver unit 140 can transmit a trigger frame for an uplink OFDMA frame. The transmitter/receiver unit 140 also converts the wireless signal received via the antenna into a wireless frame. The transmitter/receiver unit 140 then extracts the MAC frame from the converted wireless frame and outputs the frame to the frame processing unit 130.

Note that the transmitter/receiver unit 140 may be referred to as an "STA function." The conversion process from the wireless frame to the wireless signal by the transmitter/receiver unit 140 includes, for example, any of convolutional coding, interleaving, subcarrier modulation, inverse fast Fourier transform, orthogonal frequency division multiplexing (OFDM) modulation, and frequency conversion. The conversion process from the wireless signal to the wireless frame by the transmitter/receiver unit 140 includes, for example, any of frequency conversion, OFDM demodulation, fast Fourier transform, subcarrier demodulation, deinterleaving, and Viterbi decoding. The access point 10 may include a plurality of transmitter/receiver units 140 that handle different channels.

### (Channel access function of access point 10)

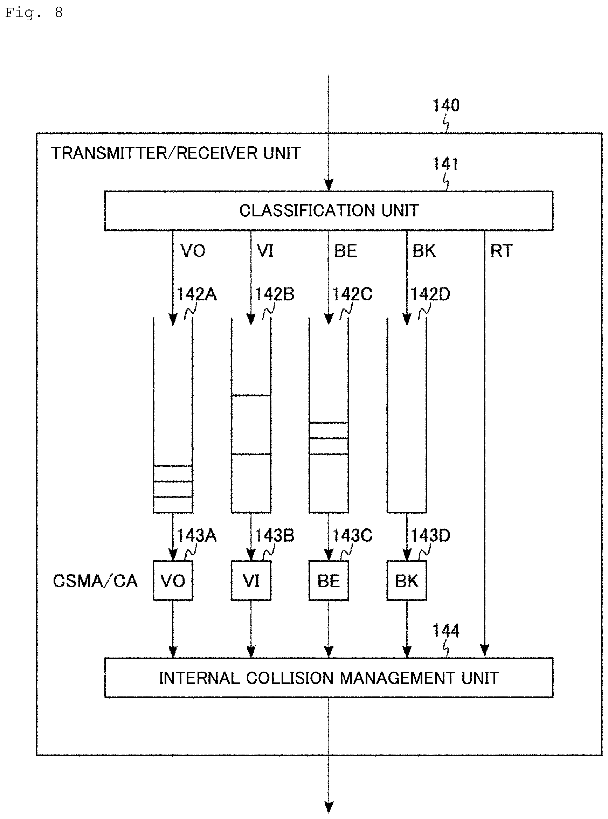

Fig. 8 is a block diagram showing an example of a configuration of a channel access function of an access point 10 according to an embodiment. As shown in Fig. 8, the transmitter/receiver unit 140 includes, for example, a classification unit 141, queues 142A, 142B, 142C, and 142D, carrier sensing execution units 143A, 143B, 143C, and 143D, and an internal collision management unit 144.

The classification unit 141 classifies the MAC frames input from the frame processing unit 130 into a plurality of access categories VO (Voice), VI (Video), BE (Best Effort), BK (Background), and RT (Real Time) on the basis of the traffic type (TID: Traffic IDentifier) included in the MAC header. The classification unit 141 then inputs the MAC frames corresponding to the access categories VO, VI, BE, and BK into queues 142A, 142B, 142C, and 142D, respectively. The queues 142A, 142B, 142C, and 142D buffer MAC frames corresponding to access categories VO, VI, BE, and BK, respectively. The queues 142A, 142B, 142C, and 142D are associated with the carrier sensing execution units 143A, 143B, 143C, and 143D, respectively.

Each of the carrier sensing execution units 143A, 143B, 143C, and 143D executes carrier sensing on the basis of CSMA/CA (Carrier Sense Multiple Access with Collision Avoidance) according to preset access parameters. The access parameters are set for each access category. For example, the access parameters are set so that the transmission of wireless signals is prioritized in the order of "VO," "VI," "BE," and "BK." Each of the carrier sensing execution units 143A, 143B, 143C, and 143D stops acquiring the right to transmit when the channel state during carrier sensing is busy, and acquires the right to transmit of a MAC frame when the channel state is idle for a predetermined time. The carrier sensing execution unit 143 that has acquired the right to transmit extracts a MAC frame from the associated queue 142 and outputs the extracted MAC frame to the internal collision management unit 144.

The internal collision management unit 144 prevents transmission collisions when a plurality of carrier sensing execution units 143 simultaneously acquire the right to transmit. Specifically, when a plurality of MAC frames are input simultaneously, the internal collision management unit 144 preferentially outputs a MAC frame of a high-priority access category. The MAC frame output from the internal collision management unit 144 is converted into a wireless frame after a preamble is added, and transmitted via an antenna.

When the MAC frame input from the frame processing unit 130 is classified as the access category RT, the classification unit 141 performs carrier sensing and inputs the MAC frame to the internal collision management unit 144 without passing through each queue 142. The MAC frame classified as the access category RT is, for example, a high-priority frame such as a trigger frame or non-periodic low latency traffic. The high-priority frame is subjected to carrier sensing without passing through each queue 142 and is prioritized over other traffic types, so that it is processed with less latency than other traffic. When transmitting a high-priority frame, the transmitter/receiver unit 140 may temporarily stop the carrier sensing of each carrier sensing execution unit 143. When a dedicated RU is allocated, the transmitter/receiver unit 140 may transmit the traffic of the access category RT without performing carrier sensing using the dedicated RU. The transmitter/receiver unit 140 may generate a trigger frame on the basis of information notified from the frame processing unit 130.

The access parameters used in carrier sensing in the transmitter/receiver unit 140 of the access point 10 include, for example, contention window (CW) min, CWmax, arbitration interframe space (AIFS), and transmission opportunity (TXOP) Limit. The contention window is a parameter used to determine the transmission waiting time for collision avoidance. CWmin and CWmax indicate a minimum value and a maximum value of the contention window respectively. An arbitration interframe space (AIFS) indicates a fixed transmission waiting time that is set for each access category for collision avoidance control having a priority control function. The TXOP corresponds to the occupancy time of the channel. TXOPLimit indicates the upper limit value of TXOP. The shorter the CWmin and the CWmax, the easier it is for the queue 142 to obtain the right to transmit. The priority of the queue 142 becomes higher as the AIFS becomes smaller. The amount of data transmitted with one right to transmit increases as the value of TXOPLimit increases. The access parameters may be referred to as enhanced distributed channel access (EDCA) parameters.

The access point 10 may have other functional configurations as long as it is capable of executing the operations described below. For example, the channel access function of the access point 10 may be implemented in the frame processing unit 130, not in the transmitter/receiver unit 140. The transmission priority may be determined on the basis of the required latency of the non-periodic low latency traffic, the priority of the traffic (SCS: stream classification service), and the traffic type. The access point 10 may acquire the right to transmit to transfer both the uplink traffic and the downlink traffic. In this case, the access point 10 uses an OFDMA frame to transmit the downlink traffic and a trigger frame to transmit the uplink traffic. The access point 10 may acquire the right to transmit using a common access parameter for the uplink and downlink traffic, and transmit the OFDMA frame and the trigger frame alternately.

### <1-3-2> Functional configuration of wireless terminal apparatus 20

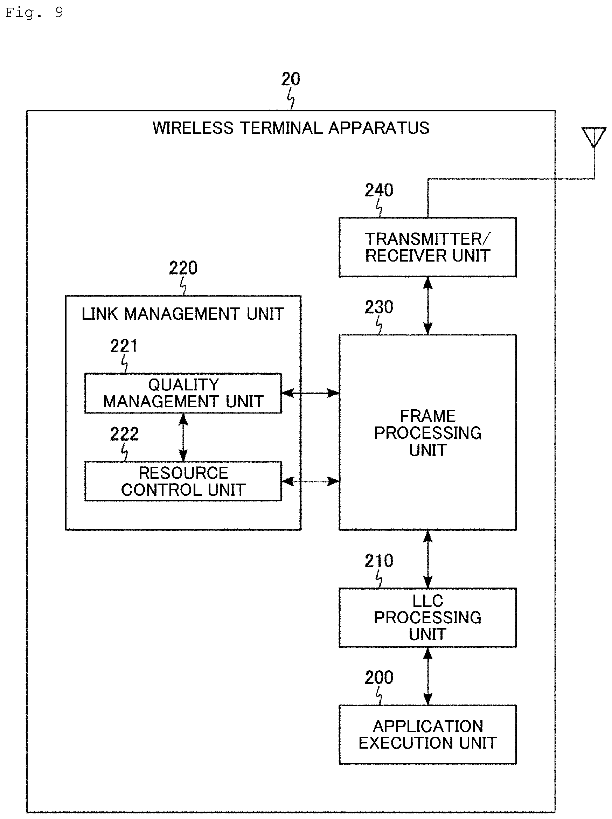

Fig. 9 is a block diagram showing an example of the functional configuration of the wireless terminal apparatus 20 according to the embodiment. As shown in Fig. 9, the wireless terminal apparatus 20 functions as a computer including, for example, an application execution unit 200, an LLC processing unit 210, a link management unit 220, a frame processing unit 230, and a transmitter/receiver unit 240. The application execution unit 200 executes processing corresponding to the seventh layer. The LLC processing unit 210 executes the processing of the LLC sublayer of the second layer and the third to seventh layers. The link management unit 220, the frame processing unit 230, and the transmitter/receiver unit 240 execute the processing of the MAC sublayer of the second layer. The transmitter/receiver unit 240 further executes the processing of the first layer.

The application execution unit 200 executes an application on the basis of data input from the LLC processing unit 210. In addition, the application execution unit 200 inputs data to the LLC processing unit 210. For example, the application execution unit 200 can display information regarding the application on the display 25. In addition, the application execution unit 200 can work on the basis of an operation of the input interface.

The LLC processing unit 210 generates an LLC packet by adding a DSAP header, an SSAP header, and the like to the data received from the network NW. The LLC processing unit 210 then inputs the generated LLC packet to the frame processing unit 230. The LLC processing unit 210 also extracts data from the LLC packet input from the frame processing unit 230. The LLC processing unit 210 then transmits the extracted data to the application execution unit 200.

The link management unit 220 manages the state of the link between the access point 10 and the wireless terminal apparatus 20, for example. The link management unit 220 can transmit a connection request to the access point 10 and perform association processing and authentication processing. Between the link management unit 220 and the frame processing unit 230, a MAC frame including information on the link, OFDMA, and the like is input and output. The link management unit 220 includes a quality management unit 221 and a resource control unit 222.

The quality management unit 221 exchanges quality requirements with the access point 10, in which the quality requirements may include the required latency of the non-periodic low latency traffic, and the like. The quality management unit 221 can measure the actual latency value of the non-periodic low latency traffic and notify the access point 10. The resource control unit 222 acquires RU allocation information notified from the access point 10. Then, on the basis of the acquired RU allocation information, the resource control unit 222 notifies the frame processing unit 230 of the RU allocation.

The frame processing unit 230 generates a MAC frame by adding a MAC header to the LLC packet input from the LLC processing unit 210 on the basis of the RU allocation notified by the resource control unit 222. Then, the frame processing unit 230 outputs the generated MAC frame to the transmitter/receiver unit 240. The frame processing unit 230 outputs the MAC frame input from the transmitter/receiver unit 240 to the LLC processing unit 210, the quality management unit 221, the resource control unit 222, and the like according to the type of MAC frame. The frame processing unit 230 may extract an LLC packet from the MAC frame and output the extracted LLC packet to the LLC processing unit 210 and the like.

The transmitter/receiver unit 240 performs carrier sensing on the basis of CSMA/CA for each link and transmits the MAC frame using the link that has acquired the right to transmit. When transmitting a MAC frame, the transmitter/receiver unit 240 generates a wireless frame by adding a preamble and the like to the MAC frame input from the frame processing unit 230. The transmitter/receiver unit 240 then converts the generated wireless frame into a wireless signal (wireless medium) and radiates (transmits) it via an antenna. The transmitter/receiver unit 240 can allocate the OFDMA frame to a subcarrier on the basis of the RU allocation and transmit the frame. The transmitter/receiver unit 240 also converts the wireless signal received via the antenna into a wireless frame. The transmitter/receiver unit 240 then extracts a MAC frame from the converted wireless frame and outputs the frame to the frame processing unit 230.

Note that the transmitter/receiver unit 240 may also be referred to as an "STA function." One link is formed by a pair of the STA function of the access point 10 and the STA function of the wireless terminal apparatus 20. The conversion process from the wireless frame to the wireless signal by the transmitter/receiver unit 240 includes, for example, any of convolutional coding, interleaving, subcarrier modulation, inverse fast Fourier transform, OFDM modulation, and frequency conversion. The conversion process from the wireless signal to the wireless frame by the transmitter/receiver unit 240 includes, for example, any of frequency conversion, OFDM demodulation, fast Fourier transform, subcarrier demodulation, deinterleaving, and Viterbi decoding. The wireless terminal apparatus 20 may include a plurality of transmitter/receiver units 240 that handle different channels.

### (Channel access function of wireless terminal apparatus 20)

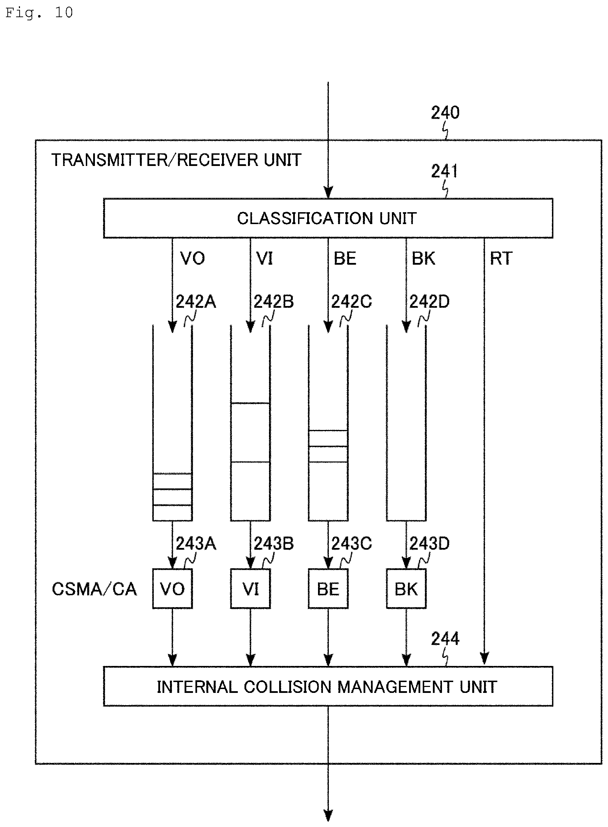

Fig. 10 is a block diagram showing an example of the configuration of the channel access function of the wireless terminal apparatus 20 according to the embodiment. As shown in Fig. 10, the transmitter/receiver unit 240 includes, for example, a classification unit 241, queues 242A, 242B, 242C, and 242D, carrier sensing execution units 243A, 243B, 243C, and 243D, and an internal collision management unit 244.

The classification unit 241 classifies the MAC frames input from the frame processing unit 230 into a plurality of access categories VO, VI, BE, BK, and RT on the basis of the traffic type included in the MAC header. The classification unit 241 then inputs the MAC frames corresponding to the access categories VO, VI, BE, and BK into queues 242A, 242B, 242C, and 242D, respectively. The queues 242A, 242B, 242C, and 242D buffer the MAC frames corresponding to the access categories VO, VI, BE, and BK, respectively. The queues 242A, 242B, 242C, and 242D are associated with the carrier sensing execution units 243A, 243B, 243C, and 243D, respectively.

Each of the carrier sensing execution units 243A, 243B, 243C, and 243D executes carrier sensing on the basis of CSMA/CA according to preset access parameters, similar to the transmitter/receiver unit 140 of the access point 10. Each of the carrier sensing execution units 243A, 243B, 243C, and 243D stops acquiring the right to transmit when the channel state during carrier sensing is busy, and acquires the right to transmit of the MAC frame when the state is idle for a predetermined time. The carrier sensing execution unit 243 that has acquired the right to transmit extracts a MAC frame from the associated queue 242 and outputs the extracted MAC frame to the internal collision management unit 244.

The internal collision management unit 244 prevents transmission collisions when a plurality of carrier sensing execution units 243 simultaneously acquire the right to transmit. Specifically, when a plurality of MAC frames are input simultaneously, the internal collision management unit 244 preferentially outputs the MAC frame of the access category with the highest priority. The MAC frame output from the internal collision management unit 244 is converted into a wireless frame after a preamble is added, and is transmitted via an antenna.

When the MAC frame input from the frame processing unit 230 is classified into the access category RT, the classification unit 241 performs carrier sensing and inputs the MAC frame to the internal collision management unit 244 without passing through each queue 242. The MAC frame classified into the access category RT is, for example, non-periodic low latency traffic. Since the non-periodic low latency traffic is subjected to carrier sensing without passing through each queue 242 and is prioritized over other traffic types, it is processed with less latency than other traffic. When transmitting a non-periodic low latency traffic, the transmitter/receiver unit 240 may temporarily stop the carrier sensing of each carrier sensing execution unit 243. When a dedicated RU is allocated, the transmitter/receiver unit 240 may transmit the traffic of the access category RT without performing carrier sensing using the dedicated RU.

The access parameters used in carrier sensing in the transmitter/receiver unit 240 of the wireless terminal apparatus 20 are, for example, CWmin, CWmax, AIFS, and TXOPLimit, as in the transmitter/receiver unit 140 of the access point 10. The shorter the CWmin and the CWmax, the easier it is for the queue 242 to obtain the right to transmit. The priority of the queue 242 becomes higher as the AIFS becomes smaller. The amount of data transmitted with one right to transmit increases as the value of TXOPLimit increases.

Note that the wireless terminal apparatus 20 may have other functional configurations as long as it is capable of executing the operations described below. For example, the channel access function of the wireless terminal apparatus 20 may be implemented in the frame processing unit 230, not in the transmitter/receiver unit 240. The transmission priority may be determined on the basis of the required latency of the non-periodic low latency traffic, the priority of the traffic, and the traffic type. When the wireless terminal apparatus 20 transmits uplink traffic on the basis of a trigger frame transmitted by the access point 10, the wireless terminal apparatus 20 transmits the traffic using an RU corresponding to the RU allocation information notified by the access point 10. The wireless terminal apparatus 20 transmits the uplink non-periodic low latency traffic using a dedicated RU. The wireless terminal apparatus 20 transmits high-priority traffic in the uplink direction using high-priority RUs. In addition, when a plurality of wireless terminal apparatuses 20 uses a common dedicated RU, the wireless terminal apparatus 20 may transmit the non-periodic low latency traffic using a dedicated RU after performing carrier sensing on the basis of CSMA/CA in order to avoid collision with the non-periodic low latency traffic of other wireless terminal apparatuses 20. Similarly, when a plurality of wireless terminal apparatuses 20 use a common high-priority RU, the wireless terminal apparatus 20 may transmit high-priority traffic using the high-priority RU in accordance with carrier sensing based on CSMA/CA or a predetermined terminal priority, or a scheduling method by the access point 10, in order to avoid collision with high-priority traffic of other wireless terminal apparatuses 20. That is, when a dedicated RU and/or a high-priority RU is shared by a plurality of STAs or a plurality of traffic flows, a random access method may be used in combination.

### <2> Operations

Next, the operation of the communication system 1 according to the embodiment will be described.

### <2-1> Overview of OFDMA

Below, as an overview of OFDMA in the communication system 1 according to the embodiment, the downlink communication flow, the uplink communication flow, and the OFDMA frame transfer period set in these communications will be described in order.

### (Downlink data transfer method)

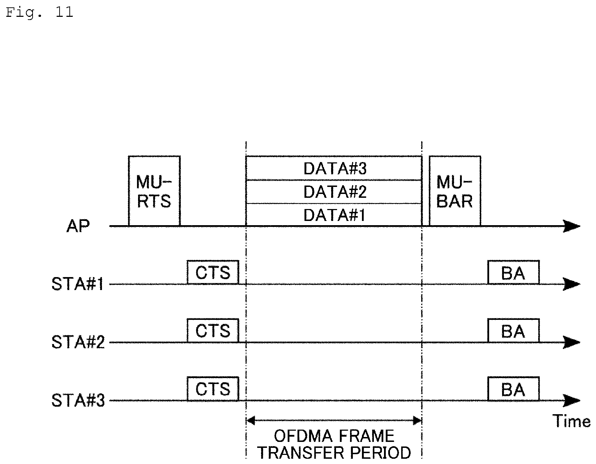

Fig. 11 is a time chart showing an example of a downlink data transfer method using OFDMA in the communication system 1 according to the embodiment. Fig. 11 shows a case where downlink data (traffic) is transferred between an access point 10 (AP) and three wireless terminal apparatuses 20 (STAs #1 to #3). As shown in Fig. 11, when downlink traffic occurs, the AP transmits MU-RTS (multi-user request to send) to each of STAs #1 to #3 in a batch. MU-RTS is a frame for reserving channels between the AP and a plurality of STAs when the AP starts transferring downlink traffic to a plurality of STAs. MU-RTS includes, for example, RU allocation information.

Each STA that receives MU-RTS transmits a CTS (clear to send) to the AP when it is able to receive downlink traffic. When the AP receives a CTS from each of STAs #1 to #3, it transmits data #1 to #3 stored in an OFDMA frame to STAs #1 to #3 using the associated RU (that is, at least one subcarrier). In Fig. 11, the period used for transmitting the OFDMA frame from the AP to each STA is shown as an "OFDMA frame transfer period."

Then, after transmitting the OFDMA frame to each of STAs #1 to #3, the AP transmits an MU-BAR (multi-user block acknowledgment request) to each of STAs #1 to #3 in a batch. MU-BAR is a frame for the AP to request a plurality of STAs to transmit a response in a batch. Each STA that receives MU-BAR transmits a BA (block acknowledgment) to the AP in response to the reception result of the OFDMA frame. The AP recognizes that each of data #1 to #3 has been successfully transmitted on the basis of the reception of the BA from each STA. As a result, the communication system 1 ends the downlink data transfer using OFDMA.

Note that, in the OFDMA frame transfer period during the downlink data transfer, the transmission start time and the time required for each of data #1 to #3 may vary. The AP may transmit the RTS and BAR separately for each STA. The AP may receive the CTS from each STA at different times. The AP may receive the BA from each STA at different times. The RU used for transmitting the OFDMA frame may be allocated for each traffic or for each STA.

### (Uplink data transfer method)

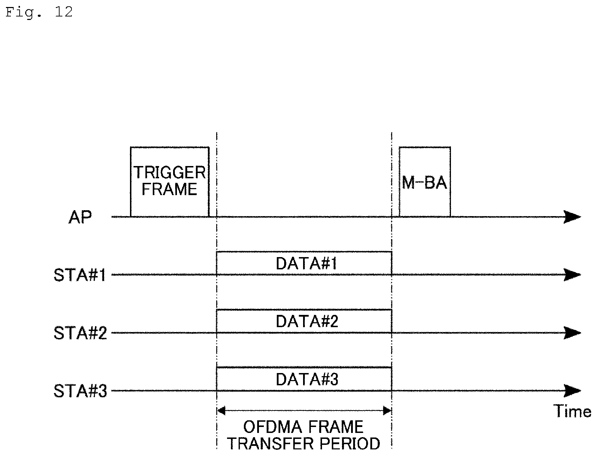

Fig. 12 is a time chart showing an example of an uplink data transfer method using OFDMA in the communication system 1 according to the embodiment. Fig. 12 shows a case where uplink data is transferred between an access point 10 (AP) and three wireless terminal apparatuses 20 (STAs #1 to #3). As shown in Fig. 12, when uplink traffic occurs, the AP transmits a trigger frame to each of STAs #1 to #3 in a batch.

Each STA that receives the trigger frame transmits data to the AP using the associated RU (that is, at least one subcarrier) on the basis of the RU allocation information stored in the trigger frame. In this example, STAs #1 to #3 transmit data #1 to #3 stored in the OFDMA frame to the AP, respectively. In Fig. 12, the period used for transmitting the OFDMA frame from each STA to the AP is shown as the "OFDMA frame transfer period."

Then, after receiving OFDMA frames from each of STAs #1 to #3, the AP transmits an M-BA (multi-STA BA) to each of STAs #1 to #3 in a batch. The M-BA is a type of BA, and is a frame that the AP uses to notify a plurality of STAs that data has been successfully received. Each STA recognizes that it has successfully transmitted each of data #1 to #3 upon receiving the M-BA from the AP. In this manner, the communication system 1 ends the uplink data transfer using OFDMA.

Note that in the OFDMA frame transfer period during data transfer in the uplink direction, the start time of transmission and the time required for transmission of each of the data #1 to #3 may vary. The AP may transmit a trigger frame or a BA to each STA individually. The timing at which each STA receives a trigger frame from the AP may vary. The timing at which each STA receives a BA from the AP may vary. The RU used to transmit the OFDMA frame may be allocated to each traffic or to each STA.

### (Configuration of OFDMA frame transfer period)

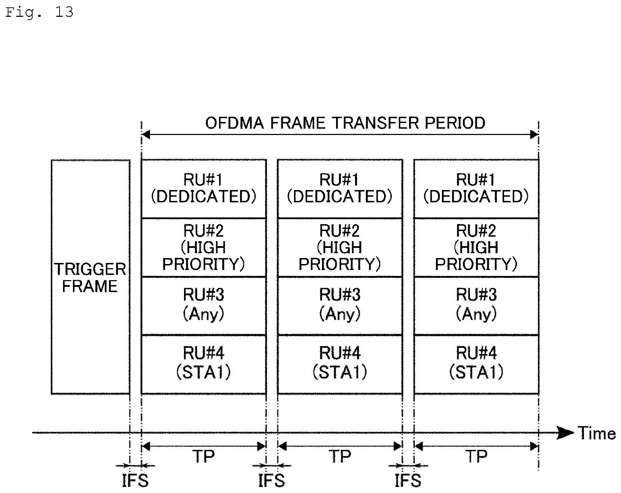

Fig. 13 is a schematic diagram showing an example of the configuration of the OFDMA frame transfer period in the communication system 1 according to the embodiment. Fig. 13 shows an example in which an OFDMA frame transfer period in which usage-specific RUs are allocated starts after a predetermined period of time (IFS: interframe space) has passed since the wireless terminal apparatus 20 has received a trigger frame. The horizontal axis indicates the time axis. As shown in Fig. 13, the OFDMA frame transfer period has, for example, a configuration in which a usage-specific RU has a plurality of transfer periods TP divided in a time-axis direction and an IFS is inserted between adjacent transfer periods TP.

Each transfer period TP is set to be shorter than the required latency of the non-periodic low latency traffic. Each transfer period TP is used to transfer frames associated with RU#1 to RU#4. In this example, the four RU#1 to RU#4 are set as usage-specific RUs. A dedicated RU associated with non-periodic low latency traffic is allocated to the RU#1 (dedicated). A high-priority RU associated with high-priority traffic is allocated to the RU#2 (high-priority). The RU#3 is allocated an RU that does not limit STA functions that can use the RU (Any). An RU associated with an STA1 is allocated to the RU#4 (STA1). In this case, for example, the following information (1) to (4) is stored in the user information list field of the trigger frame.
(1) AID = AID1 (dedicated RU and halfway transmittable) RU = RU1, AC = non-periodic low latency
(2) AID = AID2 (high priority: AC lower limit designation), RU = RU2, AC = AC_VI
(3) AID = AID0 (anything is possible), RU = RU3, AC = AC_BE
(4) AID = STA1, RU = RU4, AC = AC_BE

In the setting of (1), RU1 is designated as a dedicated RU for non-periodic low latency traffic. In the setting of (2), RU2 is designated as an RU that can be transmitted with traffic of an access category having a priority equal to or greater than AC_VI. Note that, in (1) to (4), the settings associated with the AID may be other settings. A plurality of STAs may be associated with AID. The category indicated in the AC indicates Preferred_AC. In this manner, the access point 10 can designate the usage of RUs by a combination of AID, RU allocation, and Preferred_AC in the trigger frame that triggers the uplink OFDMA frame.

As described above, in this example, a plurality of subcarriers are grouped, and a plurality of RUs including dedicated RUs associated with low latency traffic and high-priority RUs associated with high priority traffic are set. In the OFDMA frame transfer period, the divided transfer periods TP are arranged consecutively with an IFS inserted therebetween. The number of transfer periods TP included in the OFDMA frame transfer period may vary depending on the required latency of the non-periodic low latency traffic. To each transfer period TP, a plurality of dedicated RUs may be allocated, or a plurality of high-priority RUs may be allocated. A combination of usage-specific RUs allocated to each transfer period TP may be modified as appropriate depending on the quality requirements from the wireless terminal apparatus 20.

### <2-2> Operation of access point 10

Hereinafter, detailed operations of the access point 10 according to the embodiment will be described, focusing on the functional configuration of the access point 10 shown in Fig. 7. It is assumed that the communication between each functional configuration of the access point 10 and the STA is appropriately performed via the frame processing unit 130, the transmitter/receiver unit 140, and the like.

### <2-2-1> Operation of quality management unit 121

First, the operation of the quality management unit 121 of the access point 10 will be described.

### (Dedicated RU allocation method)

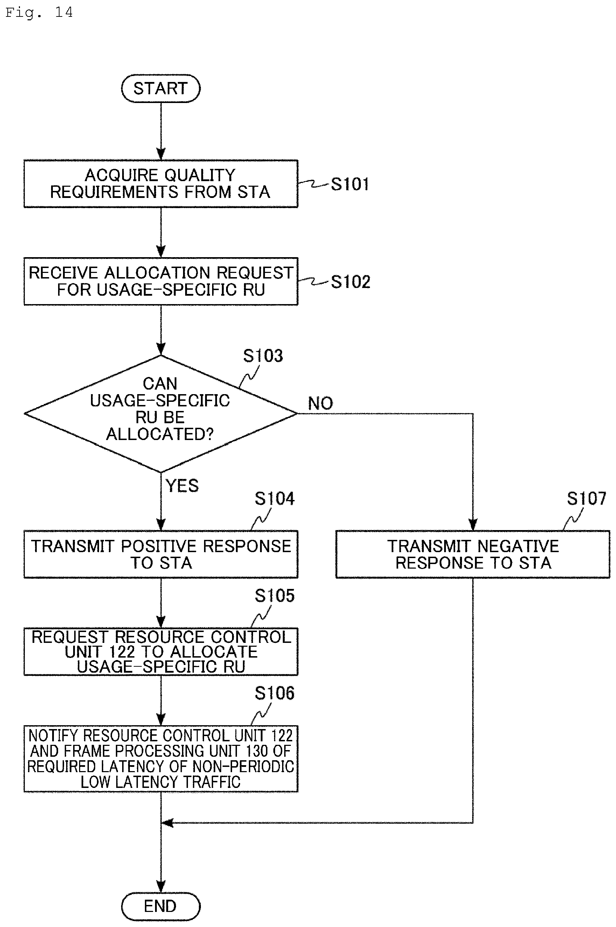

Fig. 14 is a flowchart showing an example of a usage-specific RU allocation negotiation method by the quality management unit 121 of the access point 10 (AP) according to the embodiment. For example, when non-periodic low latency traffic or high-priority traffic occurs after a link is established between an AP and an STA, the quality management unit 121 starts the processing of the flowchart shown in Fig. 14 (START).

First, the quality management unit 121 acquires quality requirements from the STA (S101). The quality requirements are generated by the quality management unit 221 of the wireless terminal apparatus 20. The frame type for transferring the quality requirements is not particularly limited. Traffic associated with the quality requirements includes non-periodic low latency traffic, deterministic periodic traffic, video traffic, and the like. The quality requirements for the non-periodic low latency traffic include information on a latency time required for transferring the non-periodic low latency traffic. The quality requirements for the deterministic periodic traffic include information on the period of the deterministic periodic traffic. The quality requirements for the video traffic include information on the video quality of the video traffic.

Next, the quality management unit 121 receives a request for allocation of a usage-specific RU (S102). The request for allocation of a usage-specific RU is generated by the quality management unit 221 of the wireless terminal apparatus 20. The frame type for transferring the request for allocation of a usage-specific RU is not particularly limited.

Next, the quality management unit 121 determines whether a usage-specific RU can be allocated (S103). The quality management unit 121 determines whether a dedicated RU can be allocated on the basis of the quality requirements for the non-periodic low latency traffic, for example, by determining whether the remaining amount of dedicated RUs that can be set is exceeded. The number of dedicated RUs that can be set may be preset by the AP, or may be changed depending on the number of STAs connected to the AP and the allocation of RUs. The quality management unit 121 determines whether necessary RUs can be allocated in accordance with a deterministic period on the basis of the quality requirements for the deterministic periodic traffic. The quality management unit 121 determines whether necessary RUs can be allocated in accordance with video quality, on the basis of the quality requirements for the video traffic. The quality management unit 121 may allocate RUs necessary for transmitting traffic targeting a specific wireless terminal apparatus 20, or may acquire a buffer status from the wireless terminal apparatus 20 each time and allocate RUs on the basis of the acquired status.

When it is determined in the process of S103 that a usage-specific RU can be allocated (S103: YES), the quality management unit 121 transmits a positive response to the STA (S104). Then, the quality management unit 121 requests the resource control unit 122 to allocate a usage-specific RU (S105). The quality management unit 121 may set a high-priority RU when allocating the usage-specific RU. For example, the quality management unit 121 sets a high-priority RU when resources are insufficient in the allocated usage-specific RU. Then, the quality management unit 121 notifies the resource control unit 122 and the frame processing unit 130 of the required latency of the non-periodic low latency traffic in order to determine whether frame division is required (S106). Then, the quality management unit 121 ends the series of processes in Fig. 14 (END).

When it is determined in the process of S103 that a usage-specific RU cannot be allocated (S103: NO), the quality management unit 121 transmits a negative response to the STA (S107). Then, the quality management unit 121 ends the series of processes in Fig. 14 (END).

### (Communication quality management method)

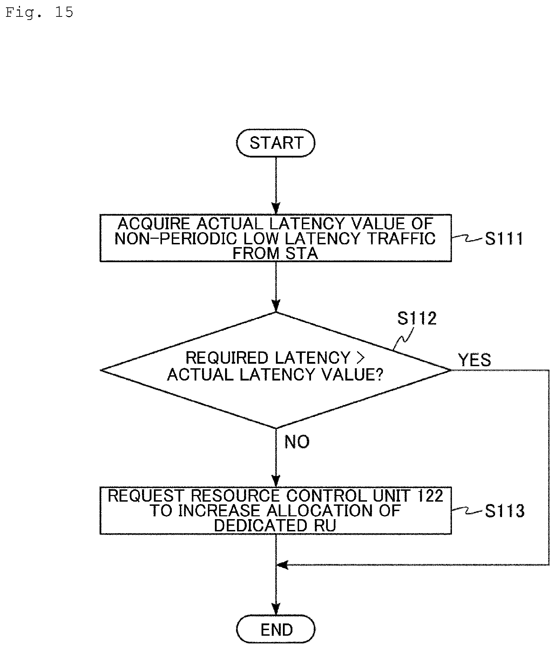

Fig. 15 is a flowchart showing an example of a communication quality management method by the quality management unit 121 of the access point 10 (AP) according to the embodiment. The quality management unit 121 starts the processing of the flowchart shown in Fig. 15 (START) after, for example, the transfer of non-periodic low latency traffic using a dedicated RU is completed.

First, the quality management unit 121 acquires the actual latency value of the non-periodic low latency traffic from the STA (S111). The actual latency value is calculated by the STA. The frame type for transferring the actual latency value is not particularly limited.

Next, the quality management unit 121 evaluates whether the "required latency > actual latency value" is satisfied (S112). When the actual latency value is greater than the required latency, it indicates that the latency time when transferring the non-periodic low latency traffic does not satisfy the requirements requested by the STA.

When the "required latency > actual latency value" is not satisfied in the process of S112 (S112: NO), the quality management unit 121 requests the resource control unit to increase the allocation of dedicated RUs (S113). In other words, the quality management unit 121 requests the resource control unit 122 to increase the allocation of dedicated RUs on the basis of the communication quality. Then, the quality management unit 121 ends the series of processes in Fig. 15 (END).

When the "required latency > actual latency value" is satisfied in the process of S112 (S112: YES), the quality management unit 121 ends the series of processes in Fig. 15

### (END).

The quality management unit 121 may execute the processes of S112 and S113 each time the actual latency value is acquired from the STA, or may execute them periodically. When the quality management unit 121 acquires the actual latency value a plurality of times, in the process of S112, the quality management unit 121 may compare the required latency with parameters based on the actual latency values, such as an average value, minimum value, or maximum value of the plurality of actual latency values acquired, jitters, and the like. The quality management unit 121 may also determine whether it is necessary to increase the allocation of dedicated RUs on the basis of the fact that the high-priority RU has been used. The reason for this is that, when the high-priority RU is used, it indicates that the originally allocated usage-specific RU has competed with another wireless terminal apparatus 20.

### <2-2-2> Operation of resource control unit 122

Next, the operation of the resource control unit 122 of the access point 10 will be described.

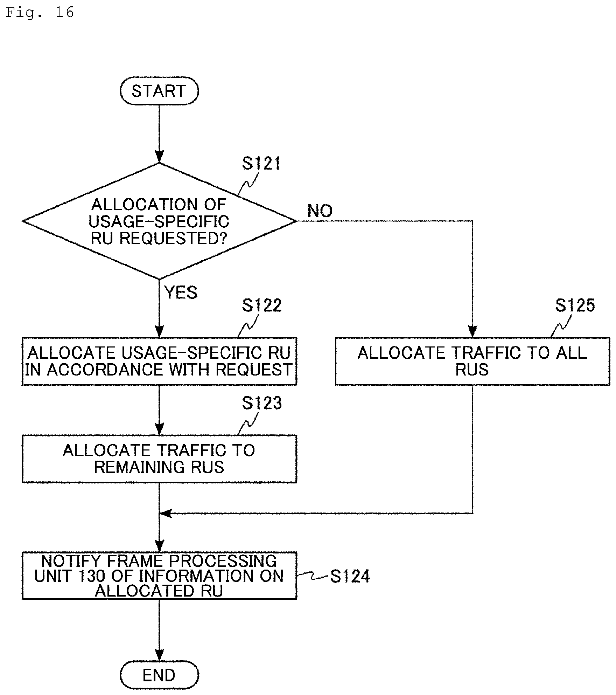

Fig. 16 is a flowchart showing an example of a RU allocation method by the resource control unit 122 of the access point 10 (AP) according to the embodiment. After a link between the AP and the STA is established, the resource control unit 122 starts the processing of the flowchart shown in Fig. 16 in response to a request for RU allocation from the STA (START).

First, the resource control unit 122 confirms whether the allocation of a usage-specific RU has been requested (S121). The request for usage-specific RU allocation may be generated by the quality management unit 121. The frame type for transferring the RU allocation request is not particularly limited.

When the allocation of a usage-specific RU has been requested in the process of S121 (S121: YES), the resource control unit 122 allocates a usage-specific RU in response to the request (S122). Then, the resource control unit 122 allocates traffic to the remaining RUs (S123). Then, the resource control unit 122 notifies the frame processing unit 130 of information on the allocated RU (S124). Then, the resource control unit 122 ends the series of processes in Fig. 16 (END).

When the allocation of a usage-specific RU is not requested in the process of S121 (S121: YES), the resource control unit 122 allocates traffic to all RUs (S122). Then, the resource control unit 122 proceeds to the process of S124 and notifies the frame processing unit 130 of the information of the allocated RU. Then, the resource control unit 122 ends the series of processes in Fig. 16

### (END).

Note that the resource control unit 122 may increase the allocation of usage-specific RUs in the process of S122 in the order of 26-tone, 52-tone, 106-tone, and the like on the basis of a request from the quality management unit 121. When allocating RUs other than usage-specific RUs, the resource control unit 122 may perform channel estimation between STAs, and when there is an RU suitable for each STA, the resource control unit 122 may preferentially allocate the RU suitable for each STA. When there is traffic with a required latency other than the non-periodic low latency traffic, the resource control unit 122 may preferentially allocate RUs to that traffic. The resource control unit 122 may also allocate RUs for each OFDMA frame on the basis of the buffer accumulation state of downlink traffic and uplink traffic.

### <2-2-3> Operation of frame processing unit 130

Next, the operation of the frame processing unit 130 of the access point 10 will be described.

### (When transmitting downlink traffic)

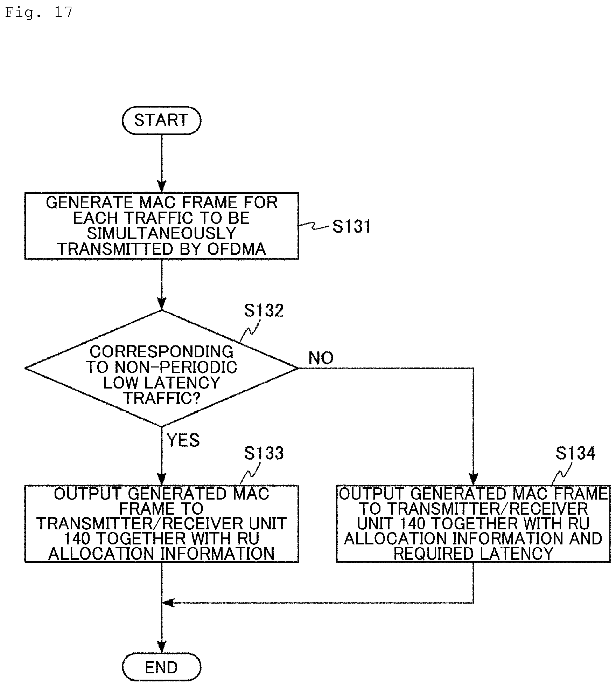

Fig. 17 is a flowchart showing an example of a trigger frame generation method by the frame processing unit 130 of the access point 10 (AP) according to the embodiment. For example, when traffic occurs after a link is established between the AP and the STA, the frame processing unit 130 starts the processing of the flowchart shown in Fig. 17 (START).

First, the frame processing unit 130 generates a MAC frame for each traffic to be simultaneously transmitted by OFDMA (S131). In the process of S131, the frame processing unit 130 may generate a plurality of MAC frames according to the amount of traffic to be simultaneously transmitted. In addition, when a MAC frame is generated, a MAC header or the like is added.

Next, the frame processing unit 130 confirms whether the generated MAC address frame corresponds to the non-periodic low latency traffic (S132). The process of S132 is performed for each of the plurality of MAC frames generated in the process of S131.

When the process of S132 confirms that the traffic corresponds to non-periodic low latency traffic (S132: YES), the frame processing unit 130 outputs the generated MAC frame together with RU allocation information to the transmitter/receiver unit 140 (S133). The RU allocation information in the process of S133 includes allocation information for RUs other than the dedicated RU. Then, the frame processing unit 130 ends the series of processes in Fig. 17 (END).

In the process of S132, when it is confirmed that the traffic does not correspond to non-periodic low latency traffic, that is, the traffic to be processed is traffic other than non-periodic low latency traffic (S132: NO), the frame processing unit 130 outputs the generated MAC frame to the transmitter/receiver unit 140 together with the RU allocation information and the required latency (S134). The RU allocation information in the process of S134 includes the allocation information of the dedicated RU. Then, the frame processing unit 130 ends the series of processes in Fig. 17 (END).

### (When instructing STA to transmit uplink traffic)

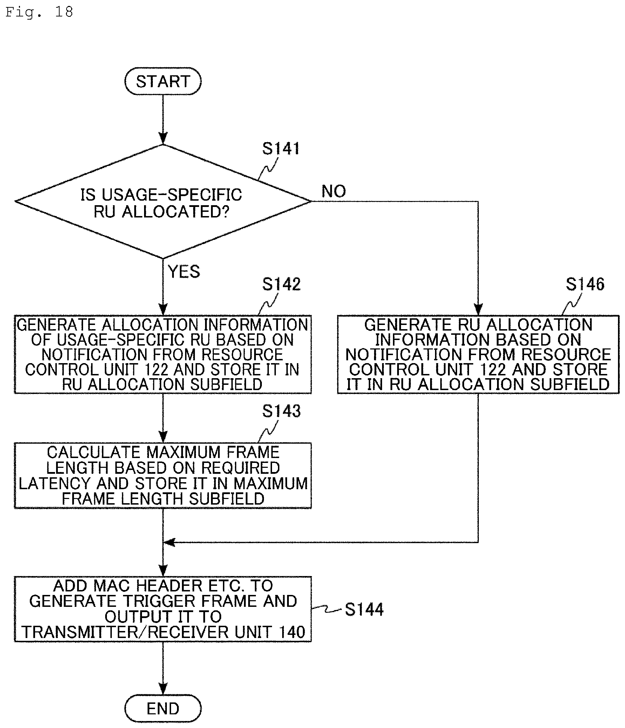

Fig. 18 is a flowchart showing an example of an OFDMA frame generation method by the frame processing unit 130 of the access point 10 (AP) according to the embodiment. For example, when the frame processing unit 130 is notified by the STA that uplink traffic has occurred, the frame processing unit 130 starts the processing of the flowchart shown in Fig. 18 (START).

First, the frame processing unit 130 confirms whether a usage-specific RU has been allocated (S141). For example, the frame processing unit 130 confirms whether an RU for transferring non-periodic low latency traffic between the AP and the STA has been allocated.

When it is confirmed in the process of S141 that a usage-specific RU has been allocated (S141: YES), the frame processing unit 130 generates usage-specific RU allocation information on the basis of the notification from the resource control unit 122 and stores it in the RU allocation subfield (S142). Then, the frame processing unit 130 calculates the maximum frame length on the basis of the required latency and stores it in the maximum frame length subfield (S143). The maximum frame length information corresponds to, for example, the maximum frame length that can satisfy the required latency of the non-periodic low latency traffic. Note that the maximum frame length information may be associated with a value smaller than the maximum frame length that can satisfy the required latency of the non-periodic low latency traffic. Then, the frame processing unit 130 generates a trigger frame by adding a MAC header and the like, and outputs the frame to the transmitter/receiver unit 140 (S144). Thereafter, the frame processing unit 130 ends the series of processes in Fig. 18 (END).

When it is confirmed in the process of S141 that a usage-specific RU is not allocated (S141: NO), the frame processing unit 130 generates RU allocation information on the basis of the notification from the resource control unit 122 and stores it in the RU allocation subfield (S146). The RU allocation information generated by the process of S146 does not include information on the usage-specific RU. Then, the frame processing unit 130 proceeds to the process of S144, generates a trigger frame by adding a MAC header and the like, and outputs the frame to the transmitter/receiver unit 140. Then, the frame processing unit 130 ends the series of processes in Fig. 18 (END).

As described above, the frame processing unit 130 can notify the STA of the allocation of RUs in uplink OFDMA by transmitting a trigger frame to the STA. The RU allocation information and maximum frame length information stored in the trigger frame may be generated by the link management unit 120.

### (When receiving uplink frame)

When the frame processing unit 130 receives a frame from the transmitter/receiver unit 140, it performs processing of the MAC header and the like. Then, the frame processing unit 130 outputs the information included in the processed frame to the network NW and the like via the LLC processing unit 110 and the like. When the received frame is a frame including data, the frame processing unit 130 outputs the received frame to the network NW. In addition, when the received frame is a request for allocation of a usage-specific RU from an STA or a report on communication quality (for example, actual latency value and the like), the frame processing unit 130 outputs the received frame to the quality management unit 121. In this manner, the frame processing unit 130 can select and output an appropriate output destination for the received frame depending on the type of uplink frame.

### <2-2-4> Operation of transmitter/receiver unit 140

Next, the operation of the transmitter/receiver unit 140 of the access point 10 will be described.

### (Downlink OFDMA frame transmission method)

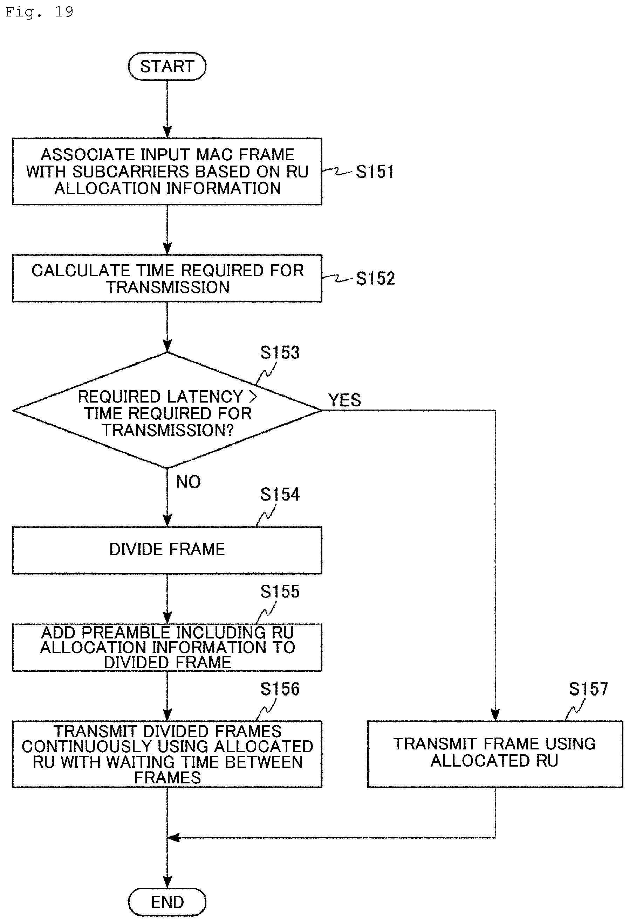

Fig. 19 is a flowchart showing an example of a downlink OFDMA frame transmission method by the transmitter/receiver unit 140 of the access point 10 (AP) according to the embodiment. When the transmitter/receiver unit 140 receives a MAC frame or the like corresponding to downlink traffic, the transmitter/receiver unit 140 starts the processing of the flowchart shown in Fig. 19 (START).

First, the transmitter/receiver unit 140 associates the MAC frame received from the frame processing unit 130 with a subcarrier on the basis of RU allocation information (S151). The transmitter/receiver unit 140 may associate the received MAC frame with a subcarrier on the basis of information notified by the frame processing unit 130 or the link management unit 120, or may associate the received MAC frame with a subcarrier on the basis of information stored in the RU allocation subfield.

Next, the transmitter/receiver unit 140 calculates the time required for transmission (S152). The time required for transmission can be estimated on the basis of the size of the MAC frame to be transmitted, the number of subchannels used to transmit the MAC frame, and the like.

Next, the transmitter/receiver unit 140 evaluates whether the "required latency > time required for transmission" is satisfied (S153).

In the process of S153, when the "required latency > time required for transmission" is not satisfied (S153: NO), the transmitter/receiver unit 140 divides the frame (S154). The period for transmitting the divided frames corresponds to the transfer period TP shown in Fig. 13. Then, the transmitter/receiver unit 140 adds a preamble including RU allocation information to each of the divided frames (S155). Then, the transmitter/receiver unit 140 uses the allocated RU to continuously transmit the divided frames while providing a waiting period (IFS) between the frames (S156). Then, the transmitter/receiver unit 140 ends the series of processes in Fig. 19 (END).

In the process of S153, when the "required latency > time required for transmission" (S153: YES), the transmitter/receiver unit 140 transmits the frame using the allocated RU (S157). When the process of S157 is executed, it is possible to satisfy the required latency of the non-periodic low latency traffic without dividing the frame. Then, the transmitter/receiver unit 140 ends the series of processes in Fig. 19 (END).

In the processes of S155 and S156, the "transmission" includes adding a preamble to the MAC frame to generate a wireless frame and wireless signal processing. The acquisition of the right to transmit in the transmitter/receiver unit 140 is on the basis of, for example, CSMA/CA. When the transmitter/receiver unit 140 detects uplink traffic in the IFS (waiting period) of the OFDMA frame transfer period, the transmitter/receiver unit 140 is configured to postpone the transmission of the divided frames until the reception of the uplink traffic is completed.

### (Downlink non-periodic low latency traffic transmission method)

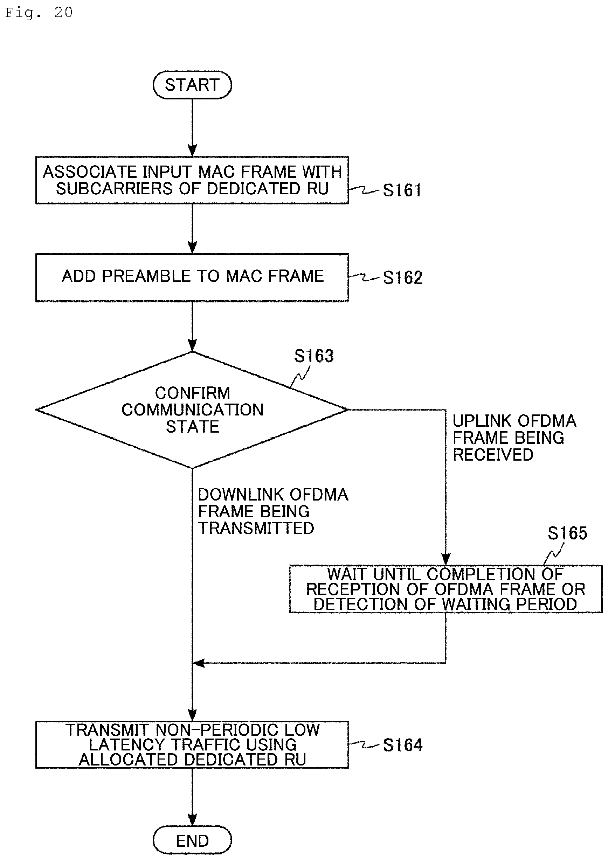

Fig. 20 is a flowchart showing an example of a downlink non-periodic low latency traffic transmission method by the transmitter/receiver unit 140 of the access point 10 (AP) according to the embodiment. When a MAC frame corresponding to downlink non-periodic low latency traffic is input, for example, the transmitter/receiver unit 140 starts the processing of the flowchart shown in Fig. 20 (START).

First, the transmitter/receiver unit 140 associates the input MAC frame with a subcarrier of a dedicated RU (S161). The transmitter/receiver unit 140 may associate the input MAC frame with the subcarrier on the basis of information notified by the frame processing unit 130, the link management unit 120, and the like, or may associate the input MAC frame with the subcarrier on the basis of information stored in the RU allocation subfield.

Next, the transmitter/receiver unit 140 adds a preamble to the MAC frame (S162). A wireless frame is generated by the process of S162. Then, the transmitter/receiver unit 140 confirms the communication state (S163). In the process of S163, the transmitter/receiver unit 140 confirms the communication state of each of the plurality of RUs, for example.

When it is confirmed in the process of S163 that a downlink OFDMA frame is being transmitted, the transmitter/receiver unit 140 transmits non-periodic low latency traffic using the allocated dedicated RU (S164). For example, when the transmitter/receiver unit 140 is transmitting downlink traffic using an RU other than the dedicated RU, the transmitter/receiver unit 140 transmits the occurred low latency traffic to one of the plurality of STAs using the dedicated RU in parallel with the transmission of the downlink traffic. Then, the transmitter/receiver unit 140 ends the series of processes in Fig. 20 (END).

When it is confirmed in the process of S163 that an uplink OFDMA frame is being received, the transmitter/receiver unit 140 waits until the reception of the OFDMA frame is completed or a waiting period is detected (S165). Then, when the transmitter/receiver unit 140 detects completion of reception of the OFDMA frame or a waiting period, it proceeds to process of S164 and transmits non-periodic low latency traffic using the allocated dedicated RU. Then, the transmitter/receiver unit 140 ends the series of processes in Fig. 20 (END).

As described above, when the transmitter/receiver unit 140 receives non-periodic low latency traffic from the frame processing unit 130, it performs processing according to the transmission state. The process of S164 is preferably performed promptly in order to reduce the latency of the non-periodic low latency traffic.

### (Uplink traffic reception method)

When the transmitter/receiver unit 140 receives a wireless signal via an antenna, it performs wireless signal processing. Then, the transmitter/receiver unit 140 extracts a MAC frame from the wireless signal by wireless signal processing, and outputs the extracted MAC frame to the frame processing unit 130. In this manner, the transmitter/receiver unit 140 can receive uplink traffic and the like.

### <2-3> Operation of wireless terminal apparatus 20

The following describes the detailed operation of the wireless terminal apparatus 20 according to the embodiment, focusing on the functional configuration of the wireless terminal apparatus 20 shown in Fig. 9. Note that the communication between each functional configuration of the wireless terminal apparatus 20 and the access point 10 is assumed to be performed via the frame processing unit 230, the transmitter/receiver unit 240, and the like as appropriate.

### <2-3-1> Operation of quality management unit 221

First, the operation of the quality management unit 221 of the wireless terminal apparatus 20 will be described.

### (Dedicated RU allocation method)

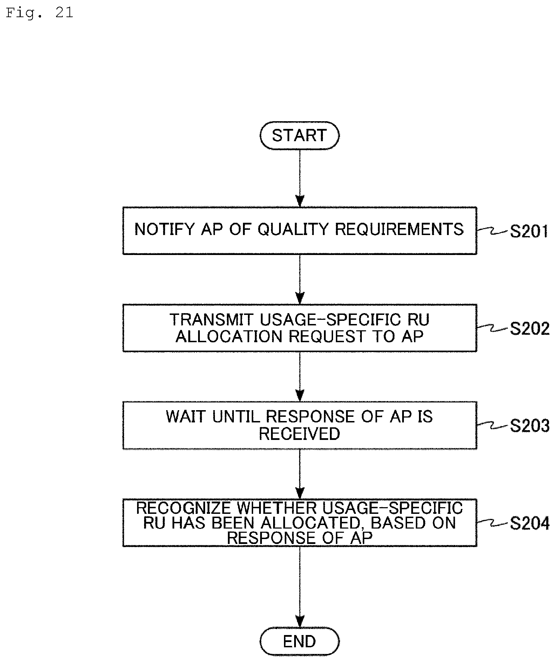

Fig. 21 is a flowchart showing an example of a usage-specific RU allocation negotiation method by the quality management unit 221 of the wireless terminal apparatus 20 (STA) according to the embodiment. For example, when the occurrence of traffic requiring low latency, such as non-periodic low latency traffic, is scheduled after a link is established between an AP and an STA, the quality management unit 221 starts the processing of the flowchart shown in Fig. 21 (START).

First, the quality management unit 221 notifies the AP of quality requirements (S201). The quality requirements are transferred, for example, from an upper layer together with traffic such as non-periodic low latency traffic. The quality requirements for non-periodic low latency traffic include, for example, a data rate, a required latency, and the like. The quality requirements for deterministic periodic low latency traffic include, for example, a data rate, a traffic occurrence cycle, and the like. The quality requirements for video traffic include, for example, a data rate, a required latency, and the like. Next, the quality management unit 221 transmits a usage-specific RU allocation request to the AP (S202). The quality management unit 221 may collectively transmit a set of the quality requirements and the usage-specific RU allocation request to the AP. Then, the quality management unit 221 waits until it receives a response from the AP (S203).

Upon receiving the response from the AP, the quality management unit 221 confirms whether a usage-specific RU has been allocated on the basis of the response from the AP (S204). For example, when a positive response is received, the quality management unit 221 confirms that a usage-specific RU has been allocated. On the other hand, when a negative response is received, the quality management unit 221 confirms that a usage-specific RU has not been allocated. Then, the quality management unit 221 ends the series of processes shown in Fig. 21 (END).

Note that, when it is confirmed in the process of S204 that a usage-specific RU has been allocated, the wireless terminal apparatus 20 can transmit non-periodic low latency traffic by using the usage-specific RU until the allocation of the usage-specific RU is canceled. After receiving a negative response, the quality management unit 221 may retry the processes of S201 to S204 after a predetermined time has elapsed. When a usage-specific RU is not allocated, the quality management unit 221 may notify an application that it is difficult to satisfy the required latency.

### (Communication quality management method)

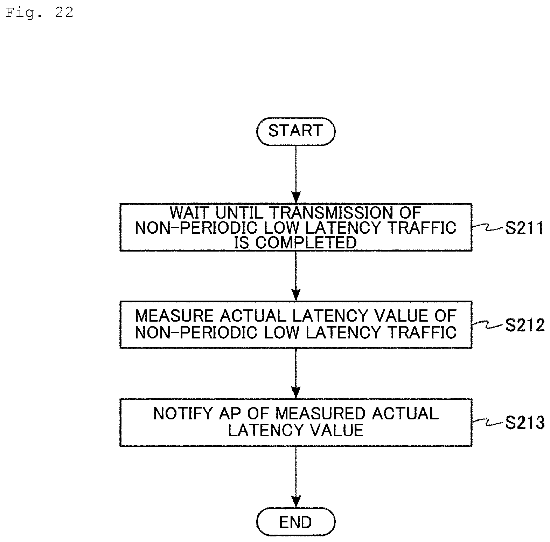

Fig. 22 is a flowchart showing an example of a communication quality management method by the quality management unit 221 of the wireless terminal apparatus 20 (STA) according to the embodiment. For example, when non-periodic low latency traffic occurs after a link is established between the AP and the STA, the quality management unit 221 starts the processing of the flowchart shown in Fig. 22 (START).

First, the quality management unit 221 waits until the transmission of the non-periodic low latency traffic is completed (S211).

When the transmission of the non-periodic low latency traffic is completed, the quality management unit 221 measures the actual latency value of the non-periodic low latency traffic (S212). The actual latency value corresponds to, for example, the time required from when the non-periodic low latency traffic occurs (when the traffic is input to the buffer) until the transmission of the non-periodic low latency traffic is completed.

Then, the quality management unit 221 notifies the AP of the measured actual latency value (S213). Then, the quality management unit 221 ends the series of processes in Fig. 22 (END).

Note that the actual latency value transmitted in the process of S213 may be an average value of a plurality of actual latency values, a jitter at the time of transmission of the non-periodic low latency traffic, a maximum latency calculated on the basis of the actual latency value and a predetermined percentage. The process of S213 may be executed on the basis of a request from the AP, or may be notified to the AP when the actual latency value exceeds the required latency. The quality management unit 221 can determine whether resources corresponding to the required latency are allocated by the series of processes in Fig. 22.

### <2-3-2> Operation of resource control unit 222

Next, the operation of the resource control unit 222 of the wireless terminal apparatus 20 will be described.

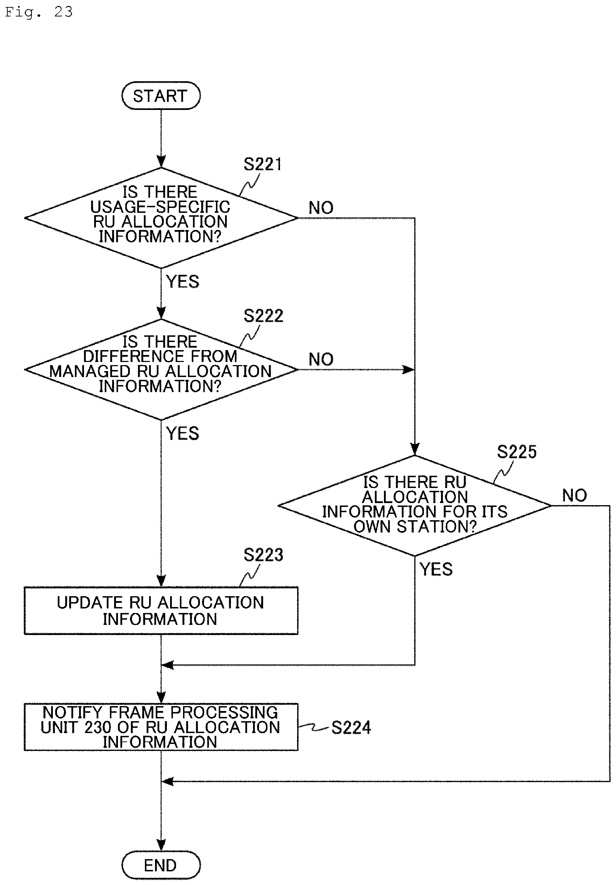

Fig. 23 is a flowchart showing an example of an RU allocation information acquisition and updating method by the resource control unit 222 of the wireless terminal apparatus 20 (STA) according to the embodiment. After a link between the AP and the STA is established, for example, when the resource control unit 222 receives RU allocation information from the AP, the resource control unit 222 starts the processing of the flowchart shown in Fig. 23 (START).

First, the resource control unit 222 confirms whether the received RU allocation information includes usage-specific RU allocation information (S221).

When it is confirmed in the process of S221 that there is usage-specific RU allocation information (S221: YES), the resource control unit 222 confirms whether there is a difference from the managed RU allocation information (S222).

When it is confirmed in the process of S222 that there is a difference from the managed RU allocation information (S222: YES), the resource control unit 222 updates the managed RU allocation information (S223). Then, the resource control unit 222 notifies the frame processing unit 230 of the updated RU allocation information (S224). Thereafter, the resource control unit 222 ends the series of processes in Fig. 23 (END).

When it is not confirmed in the process of S221 that there is usage-specific RU allocation information (S221: NO), or when it is confirmed in the process of S222 that there is no difference from the managed RU allocation information (S222: NO), the resource control unit 222 confirms whether there is RU allocation information for its own station, that is, whether there is RU allocation information for traffic other than non-periodic low latency traffic for its own station (S225).

When it is confirmed in the process of S225 that there is RU allocation information for its own station (S225: YES), the resource control unit 222 proceeds to the process of S224 and notifies the frame processing unit 230 of the RU allocation information. Thereafter, the resource control unit 222 ends the series of processes in Fig. 23 (END).

When it is confirmed in the process of S225 that there is no RU allocation information for its own station (S225: NO), the resource control unit 222 ends the series of processes in Fig. 23 (END).

### <2-3-3> Operation of frame processing unit 230

Next, the operation of the frame processing unit 230 of the wireless terminal apparatus 20 will be described.

### (When receiving frame)

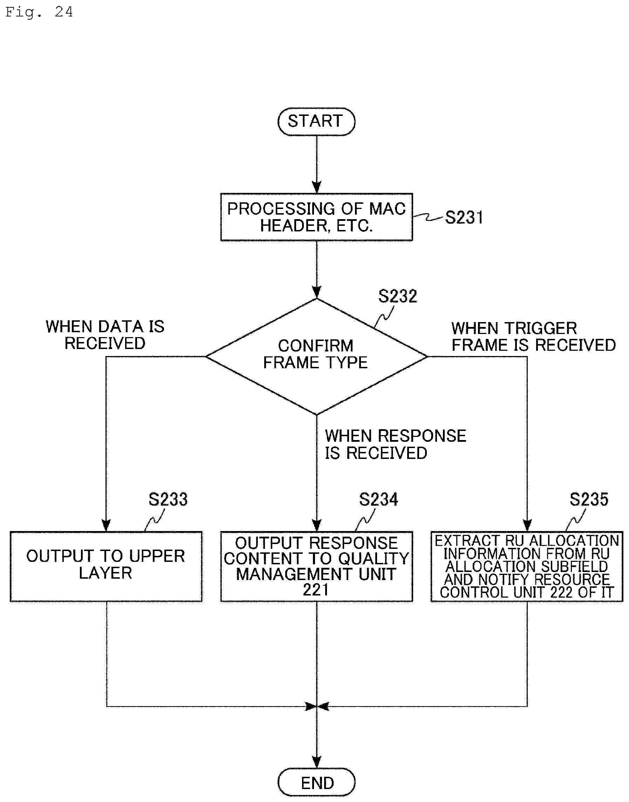

Fig. 24 is a flowchart showing an example of a downlink frame processing method by the frame processing unit 230 of the wireless terminal apparatus 20 (STA) according to the embodiment. For example, when the frame processing unit 230 receives a frame from the transmitter/receiver unit 140 after a link is established between the AP and the STA, the frame processing unit 230 starts the processing of the flowchart shown in Fig. 24 (START).

First, the frame processing unit 230 executes the processing of the MAC header and the like (S231).

Next, the frame processing unit 230 confirms the frame type (S232). When data is received, the frame processing unit 230 outputs the data included in the processed frame to the upper layer (S233). When a response to the request for allocation of usage-specific RUs is received from the AP, the frame processing unit 230 outputs the content of the response to the quality management unit 221 (S234). When the trigger frame is received, the frame processing unit 230 extracts the RU allocation information from the RU allocation subfield and notifies the resource control unit 222 (S235). Thereafter, the frame processing unit 230 ends the series of processes in Fig. 24 (END).

### (When transmitting uplink traffic)

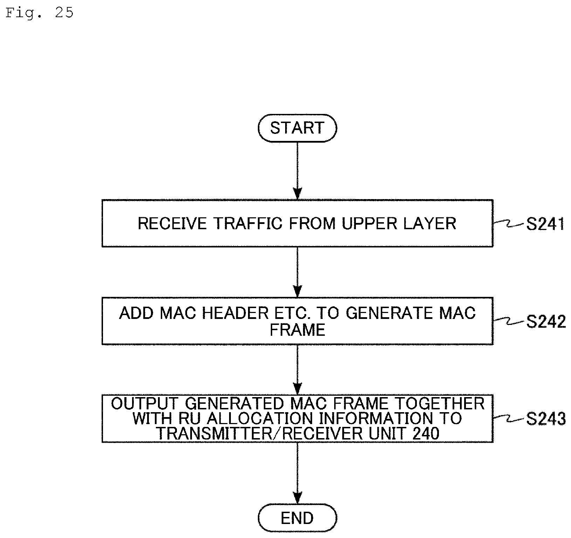

Fig. 25 is a flowchart showing an example of an uplink frame processing method by the frame processing unit 230 of the wireless terminal apparatus 20 (STA) according to the embodiment. For example, when uplink traffic occurs after a link is established between the AP and the STA, the frame processing unit 230 starts the processing of the flowchart shown in Fig. 25 (START).

First, the frame processing unit 230 receives traffic from an upper layer (S241). The traffic in S241 may be non-periodic low latency traffic or other traffic.

Next, the frame processing unit 230 adds a MAC header and the like to generate a MAC frame (S242). The MAC frame generated by the process of S242 includes data corresponding to non-periodic low latency traffic or data corresponding to other traffic.

Next, the frame processing unit 230 outputs the generated MAC frame to the transmitter/receiver unit 240 together with the RU allocation information input from the resource control unit 222 (S243). This RU allocation information may or may not include usage-specific RU allocation information on the basis of the RU allocation state between the AP and a plurality of STAs. Then, the frame processing unit 230 ends the series of processes in Fig. 25 (END).

### <2-3-4> Operation of transmitter/receiver unit 240

Next, the operation of the transmitter/receiver unit 240 of the wireless terminal apparatus 20 will be described.

### (Downlink frame reception method)

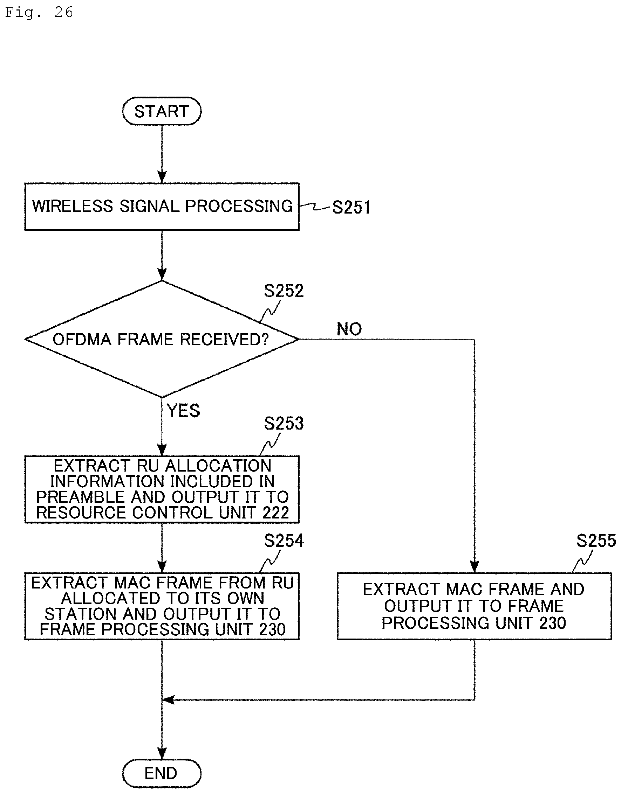

Fig. 26 is a flowchart showing an example of a downlink frame reception method by the transmitter/receiver unit 240 of the wireless terminal apparatus 20 (STA) according to the embodiment. When the transmitter/receiver unit 240 receives a wireless signal, for example, the transmitter/receiver unit 240 starts the processing of the flowchart shown in Fig. 26 (START).

First, the transmitter/receiver unit 240 executes wireless signal processing (S251). By the process of S251, the transmitter/receiver unit 240 acquires a wireless frame from the wireless signal.

Next, the transmitter/receiver unit 240 confirms whether an OFDMA frame has been received (S252). In the process of S252, the transmitter/receiver unit 240 confirms the frame type, for example.

When it is confirmed in the process of S252 that an OFDMA frame has been received (S252: YES), the transmitter/receiver unit 240 extracts RU allocation information from the preamble and outputs the information to the resource control unit 222 (S253). Then, the transmitter/receiver unit 240 performs a process of receiving the RU when detecting one corresponding to its own station from an RU allocation field. That is, the transmitter/receiver unit 240 extracts a MAC frame from the RU allocated to its own station and outputs the frame to the frame processing unit 230 (S254). Thereafter, the transmitter/receiver unit 240 ends the series of processes in Fig. 26 (END).

When it is not confirmed in the process of S252 that an OFDMA frame has been received, that is, when the received frame is a normal wireless frame that is not an OFDMA frame (S252: NO), the transmitter/receiver unit 240 proceeds to the process of S254, extracts the MAC frame, and outputs the frame to the frame processing unit 230. Then, the transmitter/receiver unit 240 ends the series of processes in Fig. 26 (END).

When it is confirmed that the trigger frame is received in the process of S252, the transmitter/receiver unit 240 outputs the received trigger frame to the frame processing unit 230. In addition, when it is confirmed that the response from the AP is received in the process of S252, the transmitter/receiver unit 240 outputs the received response to the frame processing unit 230.

### (Uplink frame transmission method)

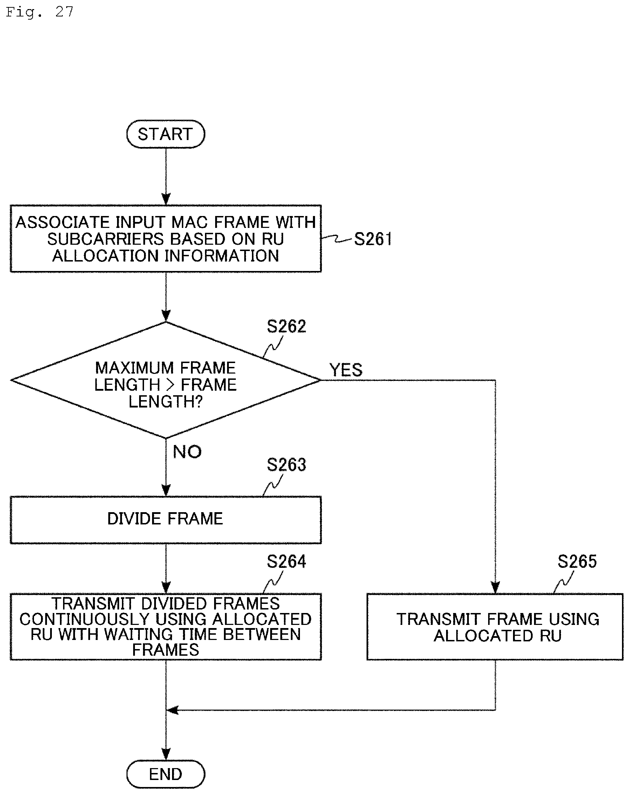

Fig. 27 is a flowchart showing an example of an uplink OFDMA frame transmission method by the transmitter/receiver unit 240 of the wireless terminal apparatus 20 (STA) according to the embodiment. When a MAC frame corresponding to uplink traffic is input, for example, the transmitter/receiver unit 240 starts the processing of the flowchart shown in Fig. 27 (START).

First, the transmitter/receiver unit 240 associates the input MAC frame with a subcarrier on the basis of the RU allocation information (S261). The transmitter/receiver unit 240 may associate the input MAC frame with the subcarrier on the basis of information notified by the frame processing unit 230, the link management unit 220, and the like, or on the basis of information stored in the RU allocation subfield.

Then, the transmitter/receiver unit 240 evaluates whether "maximum frame length > frame length" is satisfied (S262).

When "maximum frame length > frame length" is not satisfied in the process of S262 (S262: NO), the transmitter/receiver unit 240 divides the frame (S263). The period for transmitting the divided frames corresponds to the transfer period TP shown in Fig. 13. Then, the transmitter/receiver unit 240 uses the allocated RU to continuously transmit the divided frames while providing a waiting period (IFS) between the frames (S264). Thereafter, the transmitter/receiver unit 240 ends the series of processes in Fig. 27 (END).

In the process of S262, when "maximum frame length > frame length" is satisfied (S262: YES), the transmitter/receiver unit 140 transmits the frame using the allocated RU (S265). When the process of S265 is executed, it is possible to satisfy the required latency of the non-periodic low latency traffic without dividing the frame. Then, the transmitter/receiver unit 240 ends the series of processes in Fig. 27 (END).

In the processes of S264 and S265, the "transmission" includes adding a preamble to the MAC frame to generate a wireless frame and wireless signal processing. The right to transmit in the transmitter/receiver unit 240 is acquired on the basis of, for example, CSMA/CA. When the transmitter/receiver unit 240 detects downlink traffic in the IFS (waiting period) of the OFDMA frame transfer period, the transmitter/receiver unit 240 is configured to postpone the transmission of the divided frames until the reception of the downlink traffic is completed.

### (Uplink non-periodic low latency traffic transmission method)

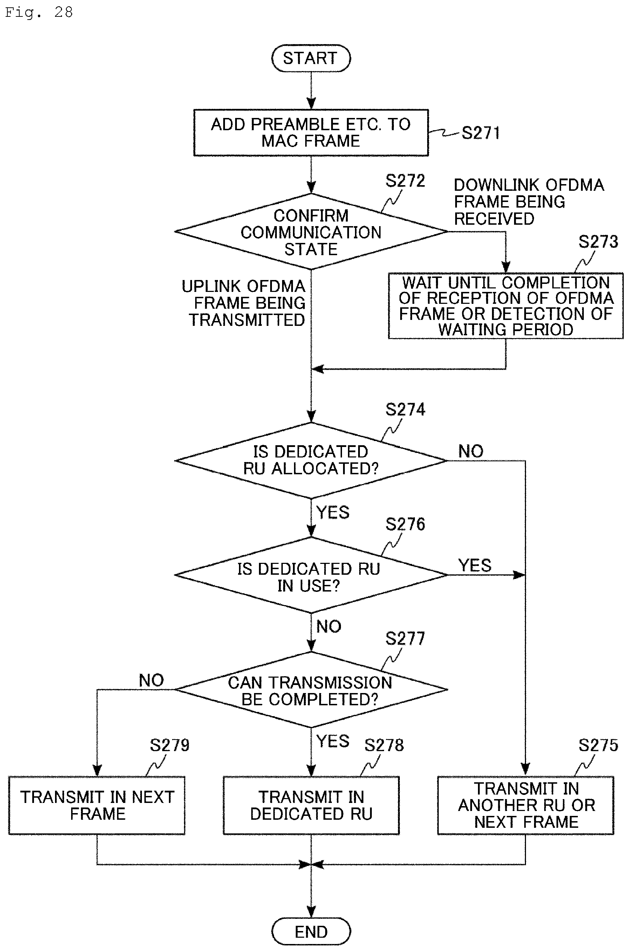

Fig. 28 is a flowchart showing an example of an uplink non-periodic low latency traffic transmission method by the transmitter/receiver unit 240 of the wireless terminal apparatus 20 (STA) according to the embodiment. When a MAC frame corresponding to uplink non-periodic low latency traffic is input, for example, the transmitter/receiver unit 240 starts the processing of the flowchart shown in Fig. 28 (START).

First, the transmitter/receiver unit 240 adds a preamble and the like to the MAC frame (S271). A wireless frame is generated by the process of S271.

Next, the transmitter/receiver unit 140 confirms the communication state (S272). When it is confirmed in the process of S272 that a downlink OFDMA frame is being received, the transmitter/receiver unit 240 waits until the reception of the OFDMA frame is completed or a waiting period is detected (S273). Then, when the reception of the OFDMA frame is completed or a waiting period is detected, the transmitter/receiver unit 240 proceeds to the process of S274. When it is confirmed in the process of S272 that an uplink OFDMA frame is being transmitted, the transmitter/receiver unit 240 proceeds to the process of S274.

In the process of S274, the transmitter/receiver unit 240 confirms whether a dedicated RU has been allocated. When it is confirmed in the process of S274 that a dedicated RU has not been assigned (S274: NO), the transmitter/receiver unit 240 transmits non-periodic low latency traffic in another RU or the next frame (S275). The "another RU" corresponds to, for example, a high-priority RU. The "next frame" corresponds to the next transfer period TP or the next OFDMA frame transfer period. When the process of S275 ends, the transmitter/receiver unit 240 ends the series of processes in Fig. 28 (End).

When it is confirmed in the process of S274 that a dedicated RU has been allocated (S274: YES), the transmitter/receiver unit 240 confirms whether the dedicated RU is in use (S276). When it is confirmed in the process of S276 that the dedicated RU is in use (S276: YES), the transmitter/receiver unit 240 proceeds to the process of S275.

When it is confirmed in the process of S276 that the dedicated RU is not in use (S276: NO), the transmitter/receiver unit 240 evaluates whether the transmission of the wireless frame created in the process of S271 can be completed within the current OFDMA frame transfer period or within the transfer period TP. Specifically, the transmitter/receiver unit 240 compares the remaining frame time in the RU with a required time for data to be transmitted. When it is determined that the transmission cannot be completed, the transmitter/receiver unit 240 waits until the next uplink OFDMA frame and transmits it. In order to reliably transmit a wireless frame in the next uplink OFDMA frame, the transmitter/receiver unit 240 may transmit a request for RU allocation by using the remaining time of the OFDMA frame transfer period.

When it is confirmed in the process of S277 that the transmission can be completed (S277: YES), the transmitter/receiver unit 240 transmits non-periodic low latency traffic using the allocated dedicated RU (S278). Thereafter, the transmitter/receiver unit 240 ends the series of processes in Fig. 28 (END).

When it is determined in the process of S277 that the transmission cannot be completed (S277: NO), the transmitter/receiver unit 240 transmits non-periodic low latency traffic in the next frame (S279). At this time, the transmitter/receiver unit 240 may notify the AP of the transmission state of the non-periodic low latency traffic by transmitting a buffer status report (BSR) to the AP. Thereafter, the transmitter/receiver unit 240 ends the series of processes in Fig. 28 (END).

As described above, when the transmitter/receiver unit 240 receives non-periodic low latency traffic from the frame processing unit 230, it performs processing according to the transmission state. It is preferable that each of the processes of S275, S278, and S279 be executed promptly to shorten the latency of the non-periodic low latency traffic. At the time of the process of S278, when a dedicated RU is shared with other wireless terminal apparatuses 20, the transmitter/receiver unit 240 performs transmission when no signal is detected in the dedicated RU by CSMA/CA. On the other hand, when a signal is detected by carrier sensing, the transmitter/receiver unit 240 performs CSMA/CA again in a high-priority RU, and performs transmission when a signal is no longer detected by carrier sensing.

### <3> Effects of Embodiment

According to the communication system 1 according to the embodiment described above, it is possible to satisfy the quality requirements for traffic. The effects of the embodiment are described below in detail.

In OFDMA, the access point generates a plurality of RUs by grouping subcarriers for downlink data transfer and allocates them to a plurality of STAs. Then, the access point transmits data to a plurality of STAs in parallel using the plurality of RUs. In addition, the access point allocates RUs to each STA for uplink data transfer and notifies them by a trigger frame. Then, each STA transmits data using the allocated RU.

Then, the communication system 1 according to the embodiment sets usage-specific RUs when allocating RUs to traffic or STAs. Usage-specific RUs include dedicated RUs that are allocated (reserved) for non-periodic low latency traffic, regardless of the presence or absence of traffic. When non-periodic low latency traffic occurs in the communication system 1, traffic in the same direction as the transfer direction of the OFDMA frame is promptly transmitted using a dedicated RU. Even when traffic in the same direction as the transfer direction of the OFDMA frame is transmitted using a dedicated RU in response to the occurrence of traffic, interference with other traffic can be suppressed. Therefore, the communication system 1 according to the embodiment can suppress latency and jitter of non-periodic low latency traffic occurring in the same direction as the transfer direction of the OFDMA frame.

On the other hand, traffic in the opposite direction to the transfer direction of the OFDMA frame may not be received accurately due to interference between adjacent RUs even when a dedicated RU is not used. In response to this, the communication system 1 according to the embodiment divides the RUs in the period during which the OFDMA frame is transmitted in the time axis direction and inserts a waiting period (IFS) between the divided and adjacent RUs. Then, taking into consideration the presence of reverse traffic, the communication system 1 confirms the presence or absence of traffic in the IFS when the OFDMA frame is longer than the required latency of the non-periodic low latency traffic. Then, the communication system 1 transmits traffic in the opposite direction to the transfer direction of the OFDMA frame using a dedicated RU during the IFS or after the transmission of the OFDMA frame is completed. The communication system 1 is also configured to postpone the transmission of traffic by other RUs when the transmission of reverse traffic in the dedicated RU is started. As a result, the communication system 1 can suppress the latency and jitter of non-periodic low latency traffic even when the traffic is in the opposite direction to the transfer direction of the OFDMA frame.

As described above, the communication system 1 according to the embodiment can suppress the latency and jitter not only for periodic traffic but also for non-periodic low latency traffic. Therefore, the communication system 1 according to the embodiment can satisfy the required latency of low-latency traffic that occurs non-periodically. Furthermore, the communication system 1 according to the embodiment can set usage-specific RUs for traffic other than the non-periodic low latency traffic. Thereby, the communication system 1 according to the embodiment can improve the efficiency of communication using OFDMA and can satisfy quality requirements for traffic.

### <4> Others

In the above embodiment, a case where non-periodic low latency traffic is transferred using a dedicated RU is illustrated, but the present invention is not limited to this. A dedicated RU may be used to transfer low-latency traffic that occurs periodically. Even when low-latency traffic that occurs periodically is transferred, latency and jitter can be suppressed using a dedicated RU.

In the embodiment, the flowcharts used to describe the operations are merely examples. The order of the processing of each operation described in the embodiments may be replaced within a range in which each operation can be fulfilled, or other processing may be added. The format of the wireless frame described in the embodiment is merely an example. The wireless frame used in the communication system 1 may be in another format as long as it is capable of executing the operations described in the embodiment. A wireless communication standard other than the IEEE 802.11 standard may be used for wireless communication between the access point 10 and the wireless terminal apparatus 20. "RU" may be referred to as a "unit."

In the communication system 1, the CPU 11 of the access point 10 and the CPU 21 of the wireless terminal apparatus 20 may each be another circuit. For example, each of the access point 10 and the wireless terminal apparatus 20 may be equipped with an MPU (Micro Processing Unit) or the like instead of a CPU. Each of the steps of processing described in the embodiments may be implemented by dedicated hardware. The processes of the access point 10 and the wireless terminal apparatus 20 may be a mixture of processes executed by software and processes executed by hardware, or may be only one of them.

The access point 10 may establish a multilink with the wireless terminal apparatus 20 using a plurality of channels. Each of the access point 10 and the wireless terminal apparatus 20 may include a plurality of transmitter/receiver units (STA functions) corresponding to a plurality of channels. In the multilink, one or more STA functions may be allocated to one traffic type. For example, the association between traffic and STA functions is set so that the traffic volume (data volume) is even among a plurality of links constituting the multi-link. Traffic of similar types (priority/non-priority and the like) may be collected in a specific link constituting the multilink.

The present invention is not limited to the above-described embodiments and various modifications can be made in an implementation stage without departing from the gist of the invention. In addition, each of the embodiments may be combined appropriately, and in such a case, advantageous effects of the combinations can be obtained. Further, the foregoing embodiments include various inventions, and various inventions can be extracted by selecting combinations of the plurality of constituent elements disclosed herein. For example, even when several constituent elements are removed from all the constituent elements described in the embodiments, configurations in which those constituent elements are removed can be extracted as an invention as long as the problem can be solved and the advantageous effects can be obtained.

### [Reference Signs List]

1 Communication system
10 Access point
20, 20-1, 20-2, 20-3 Wireless terminal apparatus
11, 21 CPU
12, 22 ROM
13, 23 RAM
14, 24 Wireless communication module
15 Wired communication module
25 Display
26 Storage
200 Application execution unit
110,210 LLC processing unit
120, 220 Link management unit
121, 221 Quality management unit
122, 222 Resource control unit
130, 230 Frame processing unit
140, 240 Transmitter/receiver unit
141,241 Classification unit
142, 142A, 142B, 142C, 142D, 242, 242A, 242B, 242C, 242D Queue
143, 143A, 143B, 143C, 143D, 243, 243A, 243B, 243C, 243D Carrier sensing execution unit
144,244 Internal collision management unit

## Claims

1. An access point comprising:
a communication circuit configured to transmit and receive wireless signals using a plurality of subcarriers; and
a processor configured to establish links with a plurality of wireless terminal apparatuses using the communication circuit, set a plurality of units in which the plurality of subcarriers are grouped, allocate a usage for each of the units, based on quality requirements received from the plurality of wireless terminal apparatuses, and notify the plurality of wireless terminal apparatuses of information on the allocated usage using a trigger frame indicating a transfer period of an uplink frame.

2. The access point according to claim 1, wherein
the plurality of units include a first unit associated with low latency traffic,
the processor confirms a communication state of the plurality of units when low latency traffic occurs,
the processor transmits the occurred low latency traffic to one of the plurality of wireless terminal apparatuses using the first unit when a downlink frame is being transmitted, and
the processor transmits the occurred low latency traffic to one of the plurality of wireless terminal apparatuses using the first unit during a waiting period in the transfer period or after the transfer period is completed, when an uplink frame is being received.

3. The access point according to claim 2, wherein
the plurality of units further include a second unit associated with high-priority traffic associated with an access category having a higher priority than a first access category,
the processor, when high-priority traffic occurs, is configured to transmit it to one of the plurality of wireless terminal apparatuses using the second unit, and
the processor is configured to receive low latency traffic from one of the plurality of wireless terminal apparatuses via the second unit when the first unit is in use in the transfer period.

4. The access point according to claim 1, wherein the trigger frame includes, for each of the units, information on a usage of the unit, an identifier of the unit, and an access category.

5. A wireless terminal apparatus comprising:
a communication circuit configured to transmit and receive wireless signals using a plurality of subcarriers; and
a processor configured to establish a link with an access point using the communication circuit, notify the access point of quality requirements for traffic to be transmitted, and set a plurality of units for each usage in which the plurality of subcarriers are grouped, based on reception of a trigger frame indicating a transfer period of an uplink frame from the access point.

6. The wireless terminal apparatus according to claim 5, wherein
the plurality of units include a first unit associated with low latency traffic,
the processor confirms a communication state of the plurality of units when low latency traffic occurs,
the processor transmits the occurred low latency traffic to the access point using the first unit when an uplink first frame is being transmitted, and
the processor transmits the occurred low latency traffic to the access point using the first unit during a waiting period in which a downlink second frame is received or
after the reception of the second frame is completed, when the second frame is being received.

7. The wireless terminal apparatus according to claim 6, wherein
the plurality of units further include a second unit associated with high-priority traffic associated with an access category having a higher priority than a first access category,
the processor, when high-priority traffic occurs, is configured to transmit it to the access point using the second unit, and
the processor is configured to transmit low latency traffic via the second unit when the first unit is in use during the transfer period.

8. The wireless terminal apparatus according to claim 5, wherein the processor, upon detecting a preamble corresponding to its own station in a frame received from the access point, performs a process of receiving a unit designated by the preamble among the plurality of units.
